(19) **Europäisches Patentamt / European Patent Office / Office européen des brevets**

(11) **EP 2 689 058 B1**

(12) # EUROPEAN PATENT SPECIFICATION

(45) Date of publication and mention
of the grant of the patent:
**13.01.2016 Bulletin 2016/02**

(51) Int Cl.:
***D04H 1/56*** *(2006.01)*   ***D04H 3/14*** *(2012.01)*
***D04H 3/147*** *(2012.01)*   ***D04H 1/544*** *(2012.01)*

(21) Application number: **12714569.6**

(22) Date of filing: **23.03.2012**

(86) International application number:
**PCT/EP2012/001274**

(87) International publication number:
**WO 2012/130414 (04.10.2012 Gazette 2012/40)**

(54) **NONWOVEN WEBS WITH ENHANCED LOFT AND PROCESS FOR FORMING SUCH WEBS**

HOCHFLORIGE VLIESBAHNEN UND VERFAHREN ZUR HERSTELLUNG SOLCHER BAHNEN

TOILES NON TISSÉES AVEC GONFLANT AMÉLIORÉ ET PROCÉDÉ DE FORMATION DE CES TOILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2011 CZ 20110163**

(43) Date of publication of application:
**29.01.2014 Bulletin 2014/05**

(73) Proprietor: **Pegas Nonwovens S.r.o.**
**669 04 Znojmo (CZ)**

(72) Inventors:
• **KLASKA, Frantisek**
**68401 Slavkov u Brna (CZ)**
• **KUMMER, Jiri**
**68304 Drnovice (CZ)**

• **MECL, Zdenek**
**67181 Novy Saldorf-Sedlesovice (CZ)**
• **KASPARKOVA, Pavlina**
**66902 Znojmo (CZ)**
• **XU, Han**
**Cincinnati, Ohio 45236 (US)**
• **DE BEER, Antonius Lambertus Johannes**
**Loveland, Ohio 45069 (US)**
• **ISELE, Olaf Erik Alexander**
**West Chester, Ohio 45069 (US)**

(74) Representative: **Zemanová, Veronika**
**Kania, Sedlak, Smola**
**Patent Attorneys**
**Mendlovo namesti 1 a**
**603 00 Brno (CZ)**

(56) References cited:
**WO-A2-02/17843**

**Description**

FIELD OF THE INVENTION

The present invention relates to a method of producing a nonwoven web material exhibiting improved properties as well as to such a nonwoven material. Such a material may be useful for a number of applications, such as cleaning articles, like wipes or dusters, or in particular for disposable articles, such as disposable absorbent articles.

BACKGROUND OF THE INVENTION

It is well known in the industry that the final properties of thermally bonded nonwoven webs can be significantly influenced by an appropriate pattern of bonding points or bonding impressions expressed particularly by the shape and the size of the bond impression as well as the total bond area, and their arrangement in the plane such as in a certain pattern. By selecting appropriate parameters for the pattern, it is possible with the use of the same input material to, for example, produce both a strong compact web resistant against rubbing, as well as a lofty web with an increased softness. There are several methods known in the industry of how to achieve specifically softness and loft of the final material.

One of the ways is to create a web with a so-called 3D-structure, as described for example in documents US4333979 published in 1982 or JP2004113489 published in 2004. In both cases a pair of patterned rollers is used to bond the webs. The achieved thickness and structure of the resulting material are, however, not suitable for all applications.

Another known way is to limit the total bond area of material and to increase the share of so-called loose fibres. In this way it is possible to produce a soft lofty material, however at the cost of a significant loss in strength. For this reason focus goes to the shape of individual bonding points, which may increase the strength of the material.

For example document WO0001215 published in 2000 uses rectangular bonding points oriented with their longer side in the CD direction, where the importance of CD oriented lines is stressed, forming an angle of 45° with the CD direction, which do not contain any bonding points. The total bonding area represents approximately 20%.

Another strategy is demonstrated for example in document WO9411186 published in 1994, where the bonding points form the perimeter of regular hexagons arranged in a structure similar to a honeycomb. According to the description, this achieves an increased feeling of comfort when in contact with human skin.

Another document WO1999/014415, published in 1999, describes elongated lightly bent (sagging) bonding points forming an angle with the MD direction of approx. 45°, where the orientation of the points regularly changes and forms a structure remotely resembling a woven textile. According to the description, this pattern increases the softness of the resulting web.

The elongated bonding points together with convex borders of bonding points combine for example document WO2008/129138 published in 2008, where individual bonding points have the shape of oval perimeter. The orientation of longer axe regularly varies MD and CD direction. According to the description it improves the abrasion resistance without compromising softness and drapeability.

A well known solution is also the use of elongated bonding points oriented in the MD direction only described for example in the patent application WO 2009/021473, published in 2009. The resulting material achieves a higher loft than with the use of a standard pyramid pattern, the bonding points of which, are similar to a regular rhombus, however softness as measured by the HandleOMeter does not achieve the values achieved in the described solution. Based on this document a standard lofty material was produced for use in comparative examples.

A particular application area of nonwoven webs is in the area of absorbent articles, such as disposable diapers, training pants, adult incontinence undergarments, feminine hygiene products, breast pads, care mats, bibs, wound dressing products, and the like. Manufacturers of such articles must continually strive to enhance their products in ways that serve to differentiate them from those of their competitors, while at the same time controlling costs so as to enable competitive pricing and the offering to the market of an attractive value-to-price proposition.

One way in which some manufacturers may seek to enhance such products is through enhancements to softness and loft.

It is believed that humans' perceptions of softness of a nonwoven web material can be affected by tactile signals, auditory signals and visual signals.

Tactile softness signals may be affected by a variety of the material's features and properties that have effect on its tactile feel, including but not limited to loft, fiber thickness and density, basis weight, microscopic pliability and flexibility of individual fibers, macroscopic pliability and flexibility of the nonwoven web as formed by the fibers, surface friction characteristics, number of loose fibers or free fiber ends, and other features.

Perceptions of softness also may be affected by auditory signals, e.g., whether and to what extent the material makes audible rustling, crinkling or other noises when touched or manipulated.

It is believed that perceptions of softness of a material also may be affected by visual signals, *i.e.,* its visual appearance. It is believed that, if a nonwoven material *looks* relatively soft to a person, it is much more likely that the person will perceive it as having relative tactile softness as well. Visual impressions of softness may be affected by a variety of features and properties, including but not limited to color, opacity, light reflectivity, refractivity or absorption, as well as to the loft, which in turn may be impacted by apparent thickness/caliper, fiber size and density, and macroscopic physical surface features.

As a result of the complexity of the mix of the above-described characteristics, to the extent softness is considered an attribute of a nonwoven web material, it may elude precise measurement or quantification. Although several methods for measuring and evaluating material features that are believed to affect softness signals have been developed, there are no standard, universally accepted units or methods of measurement for softness. It is a subjective, relative concept, difficult to characterize in an objective way. Because softness is difficult to characterize, it can also be difficult to affect in a predictable way, through changes or adjustments to specifications in materials or manufacturing processes.

Complicating efforts to define and enhance softness is the fact that differing individuals will have differing individual physiological and experiential frames of reference and perceptions concerning what material features and properties will cause them to perceive softness to a lesser or greater extent in a material, and relative other materials.

Loft in nonwovens may have importance for reasons in addition to or other than creating an impression of softness. In some applications, nonwovens may be used as components of cleaning articles, such as wipes or dusters. Improving loft of such a nonwoven can also improve its efficacy as a cleaning element. In another particular application, a nonwoven may be used to form the loops component of a hook-and-loop fastening system. Improving loft of such a nonwoven can improve its suitability for this purpose.

Various efforts have been made to provide or alter features of nonwoven web materials with the objective of enhancing loft and/or consumer perceptions of softness. These efforts have included selection and/or manipulation of fiber chemistry, basis weight, loft, fiber density, configuration and size, tinting and/or opacifying, embossing or bonding in various patterns, etc.

For example, one approach to enhancing perceived softness of a nonwoven web has involved simply increasing the basis weight of the web, otherwise manufactured through a spunlaid/spunbond process that includes formation of a batt of loose spun fibers and then consolidating by calender-bonding in a pattern. All other variables remaining constant, increasing the basis weight of such a web will have the effect of increasing the number of fibers per unit surface area, and correspondingly, increasing apparent thickness, fiber density and/or loft. This approach might be deemed effective if the only objective is increasing depth and/or loft signals affecting perceptions of softness, *i.e.,* simply increasing the basis weight of a spunbond nonwoven is one way to increase its depth or loft. However, among the costs involved in producing nonwoven web material formed of polymer fibers is the cost of the polymer resin(s) from which the fibers are spun. Higher basis weight nonwovens require more resin to produce, and therefore, cost more per unit. Thus, attempting to enhance loft and/or perceived softness by increasing nonwoven basis weight is incompatible with the ever-present objective of controlling or reducing costs.

Another approach has involved forming a nonwoven web of "bicomponent" polymer fibers, by spinning such fibers, laying them to form a batt and then consolidating them by calender-bonding with a pattern, selected to provide visual effects. Such bicomponent polymer fibers may be formed by spinnerets that have two adjacent sections, that express a first polymer from one and a second polymer from the other, to form a fiber having a cross section of the first polymer in one portion and the second polymer in the other (hence the term "bicomponent"). The respective polymers may be selected so as to have differing melting temperatures and/or expansion-contraction rates. These differing attributes of the two polymers, when combined in a side by side or asymmetric sheath-core geometry cause the bicomponent fiber products to curl in the spinning process, as they are cooled and drawn from the spinnerets. The resulting curled fibers then may be laid down in a batt and calender-bonded in a pattern. It is thought that the curl in the fibers adds loft and fluff to the web, enhancing visual and tactile softness signals.

Still another approach has involved subjecting the web to a hydroenhancing or hydroengorgement process following calender-bonding, to fluff the fibers and increase caliper and loft. It is believed that the hydroenhancing/hydroengorgement process increases loft and caliper in a manner that enhances visual and tactile softness signals.

The approaches described above and others have had varying degrees of success, but have left room for improvement in enhancing loft and visual and/or tactile softness signals. Additionally, many current methods for enhancing softness signals in a nonwoven web have the undesirable effect of decreasing desirable mechanical properties such as tensile strength, and may also add cost to the web manufacturing process in the form of additional materials or additional equipment and energy required for processing steps.

The challenge to improve loft and/or softness becomes more difficult as nonwoven web basis weight is reduced, because, as basis weight is reduced, fewer fibers per unit surface area are available to contribute to loft and opacity of the web.

## SUMMARY OF THE INVENTION

The present invention relates to providing a process of forming a web exhibiting improved softness and loft as well as to providing such a nonwoven material.

The process for the forming of a bonded web from a batt comprises the steps of

a. providing a batt comprising heat bondable individual fibers;
b. feeding the batt along a machine direction to a nip between a first and a second surface of a first and a second roller, respectively;
whereby at least the first of the surfaces comprises spaced apart bonding protrusions surrounded by recessed areas, the bonding protrusions exhibiting the ratio of the greatest measurable width W to the greatest measurable length L of at least 1:2.5, while the perimeter of the shape of the surface of the bonding protrusions comprise a convexly formed portion,
c. feeding the batt into the nip, thereby compressing the batt in the nip between the first and the second roller, and thereby affecting the fiber positioning by the bonding protrusions which are either asymmetric or exhibit a shape tilt angle $\alpha_T$ of between 1° and 40° relative to the machine direction ;
d. bonding the batt in the nip by contacting the web with the bonding protrusions of the first surface and the second surface thereby forming consolidating bonds comprising thermally fused fibers.
e. removing the web from the nip.

The nonwoven material comprises heat bondable fibers and a plurality of bond impressions. The plurality of bond impressions forms a regular pattern. The bond impressions have a bond shape whereby the bond shape perimeter comprises a convex portion and a greatest measurable length and a greatest measurable width, wherein an aspect ratio of the greatest measurable length to the greatest measurable width is at least 2.5. The bond shape is asymmetric or is oriented such that a line intersecting the bond shape perimeter along which the greatest measurable length exists and intersects an axis lying on the surface along the machine direction to form an angle $\alpha_T$ of between 1 degree and 40 degrees.

## BRIEF DESCRIPTION OF THE DRAWINGS

Fig. 1A is a perspective view of a disposable diaper shown laid out horizontally in a relaxed condition, wearer-facing surfaces up;
Fig. 1B is a plan view of a disposable diaper shown laid out horizontally in a stretched out, flattened state (stretched out against elastic contraction induced by the presence of elastic members), wearer-facing surfaces facing the viewer;
Fig. 2A is a cross section of the diaper depicted in Figs. 1A and 1B, taken through line 2-2 in those figures;
Fig. 2B is a schematic cross section of a portion of a laminate of a polymeric film and a nonwoven web, taken through a pattern of bond impressions in the nonwoven web;
Fig. 3 is a simplified schematic view of a batt moving through the nip between calender rollers to form a calender-bonded nonwoven web;
Fig. 4A is a view of a pattern of bonding surface shapes of bonding protrusions that may be imparted to the surface of a calender roller, to create a corresponding pattern of consolidating bond impressions having bond shapes in a nonwoven web;
Fig. 4B is a view of another pattern of bonding surface shapes of bonding protrusions that may be imparted to the surface of a calender roller, to create another corresponding pattern of consolidating bond impressions having bond shapes in a nonwoven web;
Fig. 4C is a magnified view of the pattern of bonding surface shapes of bonding protrusions or consolidating bond impressions having bond shapes appearing in Fig. 4B;
Fig. 5A is a view of another pattern of bonding surface shapes of bonding protrusions that may be imparted to the surface of a calender roller, to create another corresponding pattern of consolidating bond impressions having bond shapes in a nonwoven web;
Fig. 5B is a magnified view of the pattern of bonding surface shapes of bonding protrusions or consolidating bond impressions having bond shapes appearing in Fig. 5A;
Fig. 5C is a magnified view of the pattern of bonding surface shapes of bonding protrusions or consolidated bond impressions having bonding impressions appearing in Fig. 5A;
Fig. 6A is a view of another pattern of bonding surface shapes of bonding protrusions that may be imparted to the surface of a calender roller, to create another corresponding pattern of consolidated bond impressions having bond shapes in a nonwoven web; and

Fig. 6B is a magnified view of the pattern of bonding surface shapes of bonding protrusions or consolidating bond impressions having bond shapes appearing in Fig. 6A.

DETAILED DESCRIPTION OF EXEMPLARY EMBODIMENTS

Definitions

"Absorbent article" refers to devices that absorb and contain body exudates, and, more specifically, refers to devices that are placed against or in proximity to the body of the wearer to absorb and contain the various exudates discharged from the body. Absorbent articles may include diapers, training pants, adult incontinence undergarments and pads, feminine hygiene pads, breast pads, care mats, bibs, wound dressing products, and the like. As used herein, the term "exudates" includes, but is not limited to, urine, blood, vaginal discharges, breast milk, sweat and fecal matter.

A "batt" is used herein to refer to fiber materials prior to being consolidated in a final calendering process as described herein. A "batt" comprises individual fibers, which are usually unbonded to each other, although a certain amount of pre-bonding between fibers may be performed and is also included in the meaning, such as may occur during or shortly after the lay-down of fibers in a spunlaying process, or as may be achieved be a pre-calendering. This pre-bonding, however, still permits a substantial number of the fibers to be freely moveable such that they can be repositioned. A "batt" may comprise several strata, such as may result from depositing fibers from several beams in a spunlaying process.

"Bicomponent" refers to fiber having a cross-section comprising two discrete polymer components, two discrete blends of polymer components, or one discrete polymer component and one discrete blend of polymer components. "Bicomponent fiber" is encompassed within the term "multicomponent fiber." A Bicomponent fiber may have an overall cross section divided into two or more subsections of the differing components of any shape or arrangement, including, for example, coaxial subsections, core-and-sheath subsections, side-by-side subsections, radial subsections, etc.

"Bond area percentage" on a nonwoven web is a ratio of area occupied by bond impressions, to the total surface area of the web, expressed as a percentage, and measured according to the Bond Area Percentage Method set forth herein.

"Bonding roller," "calender roller" and "roller" are used interchangeably.

A "bond impression" in a nonwoven web is the surface structure created by the impression of a bonding protrusion on a calender roller into a nonwoven web. A bond impression is a location of deformed, intermeshed or entangled, and melted or thermally fused, materials from fibers superimposed and compressed in a z-direction beneath the bonding protrusion, which form a bond. The individual bonds may be connected in the nonwoven structure by loose fibres between them. The shape and size of the bond impression approximately corresponds to the shape and size of the bonding surface of a bonding protrusion on the calender roller.

A "column" of bonds on a nonwoven web is a group of nearest neighboring bonds of like shape and rotational orientation that are arranged along the line that extends most predominately in the machine direction.

"Cross direction" (CD) - with respect to the making of a nonwoven web material and the nonwoven web material, refers to the direction along the web material substantially perpendicular to the direction of forward travel of the web material through the manufacturing line in which the web material is manufactured. With respect to a batt moving through the nip of a pair of calender rollers to form a bonded nonwoven web, the cross direction is perpendicular to the direction of movement through the nip, and parallel to the nip.

"Disposable" is used in its ordinary sense to mean an article that is disposed or discarded after a limited number of usage events over varying lengths of time, for example, less than about 20 events, less than about 10 events, less than about 5 events, or less than about 2 events.

"Diaper" refers to an absorbent article generally worn by infants and incontinent persons about the lower torso so as to encircle the waist and legs of the wearer and that is specifically adapted to receive and contain urinary and fecal waste. As used herein, term "diaper" also includes "pant" which is defined below.

"Fiber" and "filament" are used interchangeably.

"Fiber diameter" is expressed in units of $\mu$m. The terms "grams of fiber per 9000 m" (denier or den) or "grams of fiber per 10000 m" (dTex) are used to describe the fineness or coarseness of fibers, which are linked to the diameter (when assumed to be circular) by the density of the employed material(s).

"Film" - means a skin-like or membrane-like layer of material formed of one or more polymers, which does not have a form consisting predominately of a web-like structure of consolidated polymer fibers and/or other fibers.

"Length" or a form thereof, with respect to a diaper or training pant, refers to a dimension measured along a direction perpendicular to the waist edges and/or parallel to the longitudinal axis.

"Machine direction" (MD) - with respect to the making of a nonwoven web material and the nonwoven web material, refers to the direction along the web material substantially parallel to the direction of forward travel of the web material through the manufacturing line in which the web material is manufactured. With respect to a nonwoven batt moving through the nip of a pair of calender rollers to form a bonded nonwoven web, the machine direction is parallel to the direction of movement through the nip, and perpendicular to the nip.

"Monocomponent" refers to fiber formed of a single polymer component or single blend of polymer components, as distinguished from bicomponent or multicomponent fiber.

"Multicomponent" refers to fiber having a cross-section comprising more than one discrete polymer component, more than one discrete blend of polymer components, or at least one discrete polymer component and at least one discrete blend of polymer components. "Multicomponent fiber" includes, but is not limited to, "bicomponent fiber." A multicomponent fiber may have an overall cross section divided into subsections of the differing components of any shape or arrangement, including, for example, coaxial subsections, core-and-sheath subsections, side-by-side subsections, radial subsections, islands-in-the-sea, etc.

A "nonwoven" is a manufactured sheet or web of directionally or randomly oriented fibers which are first formed into a batt and then consolidated and bonded together by friction, cohesion, adhesion or one or more patterns of bonds and bond impressions created through localized compression and/or application of pressure, heat, ultrasonic, or heating energy, or a combination thereof. The term does not include fabrics which are woven, knitted, or stitch-bonded with yarns or filaments. The fibers may be of natural or man-made origin and may be staple or continuous filaments or be formed in situ. Commercially available fibers have diameters ranging from less than about 0.001 mm to more than about 0.2 mm and they come in several different forms: short fibers (known as staple, or chopped), continuous single fibers (filaments or monofilaments), untwisted bundles of continuous filaments (tow), and twisted bundles of continuous filaments (yarn). Nonwoven fabrics can be formed by many processes including but not limited to meltblowing, spunbonding, spunmelting, solvent spinning, electrospinning, carding, film fibrillation, melt-film fibrillation, airlaying, dry-laying, wetlaying with staple fibers, and combinations of these processes as known in the art. The basis weight of nonwoven fabrics is usually expressed in grams per square meter (gsm).

"Opacity" is a numeric value relating to the ability of a web material to transmit light therethrough, measured according the Opacity Measurement Method set forth herein.

"Pant" or "training pant", as used herein, refer to disposable garments having a waist opening and leg openings designed for infant or adult wearers.

When used as an adjective in connection with a component of a material, the term "predominately" means that the component makes up greater than 50% by weight of the material. When used as an adjective in connection with a directional orientation of a physical feature or geometric attribute thereof, "predominately" means the feature or attribute has a projection onto a line extending along the direction indicated, greater in length than the projection onto a line perpendicular thereto. Within other context, the term "predominantly" refers to a condition which imparts a substantial effect on a property or feature. Thus, when a material comprises "predominantly" a component said to impart a property, this component imparts a property that the material otherwise would not exhibit. For example, if a material comprises "predominantly" heat-fusible fibers, the quantity and components of these fibers must be sufficient to allow heat fusion of the fibers.

A "bonding protrusion" or "protrusion" is a feature of a bonding roller at its radially outermost portion, surrounded by recessed areas. Relative the rotational axis of the bonding roller, a bonding protrusion has a radially outermost bonding surface with a bonding surface shape and a bonding surface shape area, which generally lies along an outer cylindrical surface with a substantially constant radius from the bonding roller rotational axis; however, protrusions having bonding surfaces of discrete and separate shapes are often small enough relative the radius of the bonding roller that the bonding surface may appear flat/planar; and the bonding surface shape area is closely approximated by a planar area of the same shape. A bonding protrusion may have sides that are perpendicular to the bonding surface, although usually the sides have an angled slope, such that the cross section of the base of a bonding protrusion is larger than its bonding surface. A plurality of bonding protrusions may be arranged on a calender roller in a pattern. The plurality of bonding protrusions has a bonding area per unit surface area of the outer cylindrical surface which can be expressed as a percentage, and is the ratio of the combined total of the bonding shape areas of the protrusions within the unit, to the total surface area of the unit.

A "row" of bonds on a nonwoven web is group of bonds of like shape and rotational orientation that are arranged along the line that extends most predominately in the cross direction.

"Tensile Strength" refers to the maximum tensile force (Peak Force) a material will sustain before tensile failure, as measured by the Tensile Strength Measurement Method set forth herein.

"Thickness" and "caliper" are used herein interchangeably.

"Volume mass" is the ratio of basis weight and thickness and indicates the bulkiness and fluffiness of the product, which are important properties of the nonwoven web according to the invention. The lower the value, the bulkier is the web.

$$\text{Volume mass } [kg/m^3] = \text{basis weight } [g/m^2] \text{ / thickness } [mm].$$

"Width" or a form thereof, with respect to a diaper or training pant, refers to a dimension measured along a direction parallel to the waist edges and/or perpendicular to the longitudinal axis.

"Z-direction," with respect to a web, means generally orthogonal or perpendicular to the plane approximated by the web along the machine and cross direction dimensions.

Nonwovens according to the present invention may be used for the topsheet, backsheet outer layer, loops component in a hook-and-loop fastening system of an absorbent article, or any other portion of a manufactured article such as cleansing wipes and other personal hygiene products, dusters and dusting cloths, household cleaning cloths and wipes, laundry bags, dryer bags and sheets comprising a layer formed of nonwoven web.

A particularly preferred application is in the area of disposable absorbent articles, wherein the enhanced properties of the nonwoven materials also enhance the *softness attributes.* Henceforth, the benefits of the present invention are first described in the context of such articles.

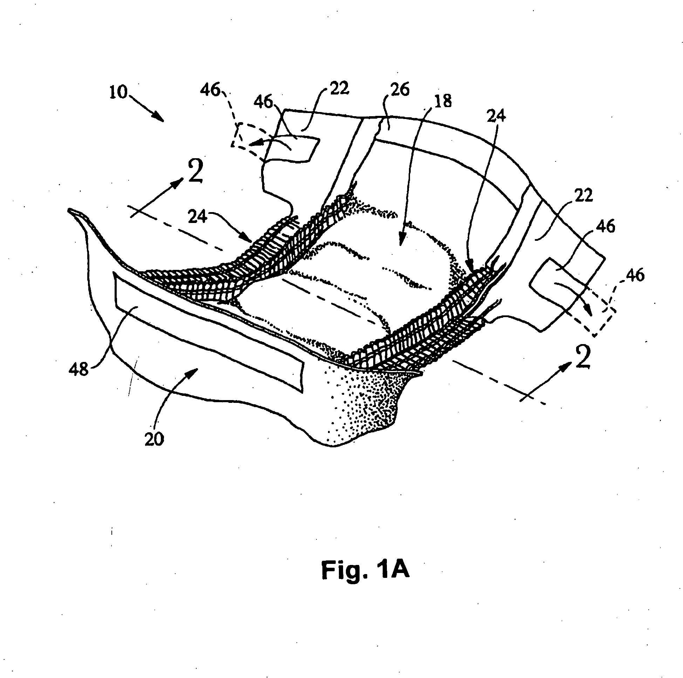

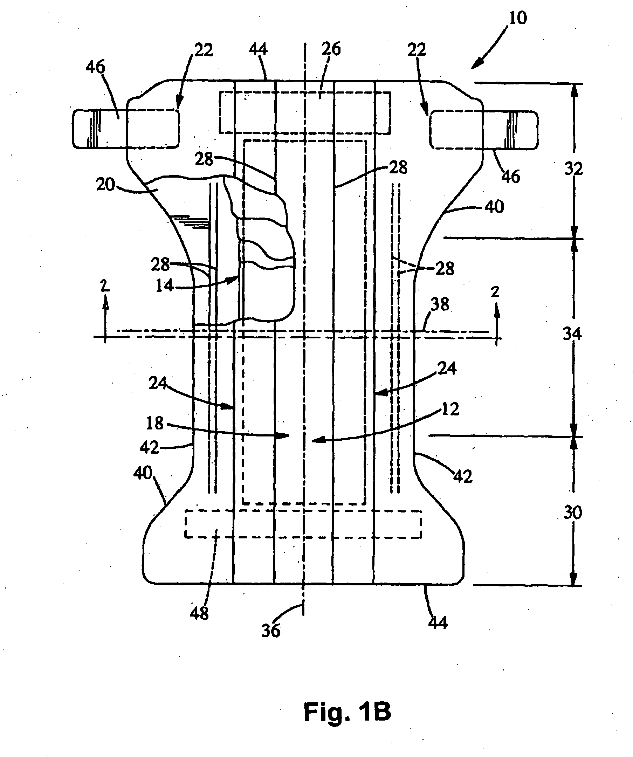

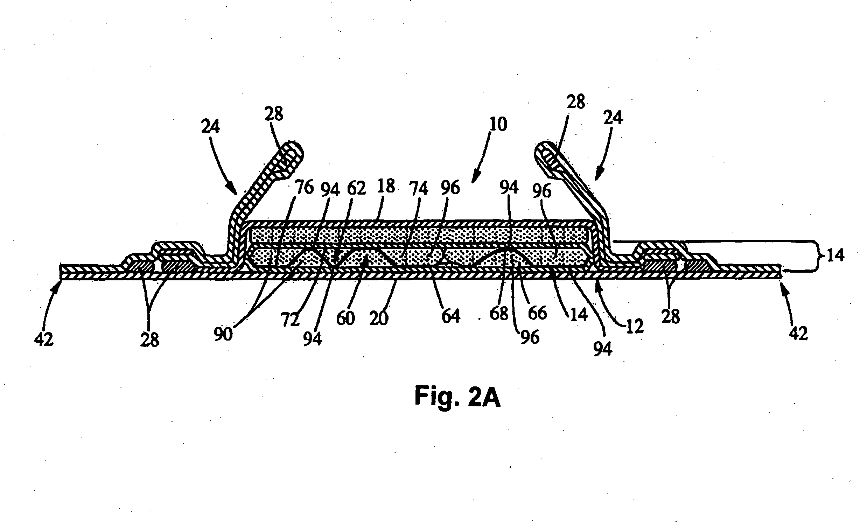

Fig. 1A is a perspective view of a diaper 10 in a relaxed, laid-open position as it might appear opened and lying on a horizontal surface. Fig. 1B is a plan view of a diaper 10 shown in a flat-out, uncontracted state (*i.e.,* without elastic induced contraction), shown with portions of the diaper 10 cut away to show underlying structure. The diaper 10 is depicted in Fig. 1B with its longitudinal axis 36 and its lateral axis 38. Portions of the diaper 10 that contact a wearer are shown oriented upwards in Fig. 1A, and are shown facing the viewer in Fig. 1B. Fig. 2A is a cross section of the diaper taken at line 2-2 in Fig. 1B.

The diaper 10 generally may comprise a chassis 12 and an absorbent core 14 disposed in the chassis. The chassis 12 may comprise the main body of the diaper 10.

The chassis 12 may include a topsheet 18, which may be liquid pervious, and a backsheet 20, which may be liquid impervious. The absorbent core 14 may be encased between the topsheet 18 and the backsheet 20. The chassis 12 may also include side panels 22, elasticized leg cuffs 24, and an elastic waist feature 26. The chassis 12 may also comprise a fastening system, which may include at least one fastening member 46 and at least one landing zone 48. One or more layers of the topsheet and/or backsheet may be formed of a nonwoven web as described below.

The leg cuffs 24 and the elastic waist feature 26 may each typically comprise elastic members 28. One end portion of the diaper 10 may be configured as a first waist region 30 of the diaper 10. An opposite end portion of the diaper 10 may be configured as a second waist region 32 of the diaper 10. An intermediate portion of the diaper 10 may be configured as a crotch region 34, which extends longitudinally between the first and second waist regions 30 and 32.

In order to apply and keep diaper 10 in place about a wearer, the second waist region 32 may be attached by the fastening member 46 to the first waist region 30 to form leg opening(s) and an article waist. When fastened, the fastening system carries a tensile load around the article waist.

The diaper 10 may be provided with a re-closable fastening system or may alternatively be provided in the form of a pant-type diaper.For unitary absorbent articles, the chassis 12 and absorbent core 14 may form the main structure of the diaper 10 with other features added to form the composite diaper structure. While the topsheet 18, the backsheet 20, and the absorbent core 14 may be assembled in a variety of well-known configurations.

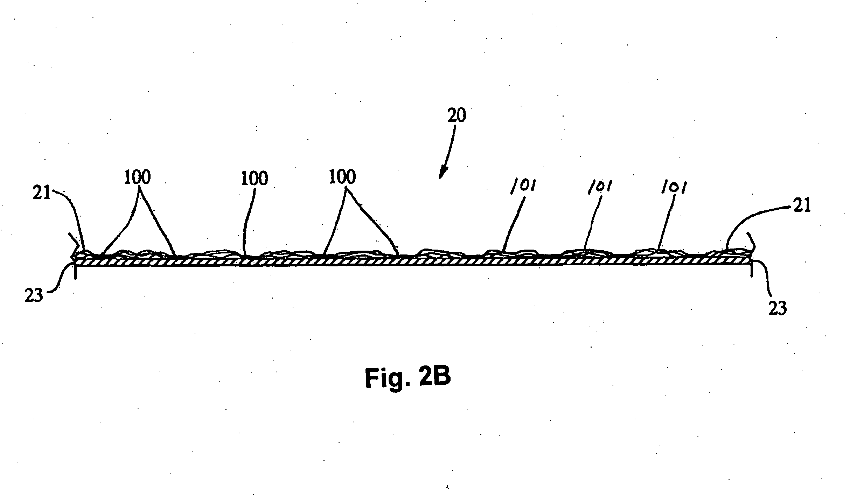

The backsheet 20 may be joined with the topsheet 18. The backsheet 20 may serve to prevent the exudates absorbed by the absorbent core 14 and contained within the diaper 10 from soiling other external articles that may contact the diaper 10, such as bed sheets and clothing. Referring to Fig. 2B, the backsheet 20 may be substantially impervious to liquids (*e.g.*, urine) and may be formed of a laminate of a nonwoven 21 and a thin polymeric film 23 such as a thermoplastic film having a thickness of about 0.012 mm (0.5 mil) to about 0.051 mm (2.0 mils). Nonwoven 21 may be a nonwoven web as described herein.

In some executions, the backsheet of the present invention may have a water vapor transmission rate (WVTR) of greater than about 2,000 g/24h/m2, measured according to WSP 70.5 (08) at 37.8 0C and 60% Relative Humidity.

Suitable nonwoven web materials useful in the present invention include, but are not limited to spunbond, meltblown, spunmelt, solvent-spun, electrospun, carded, film fibrillated, melt-film fibrillated, air-laid, dry-laid, wet-laid staple fibers, and other and other nonwoven web materials formed in part or in whole of polymer fibers, as known in the art. A suitable nonwoven web material may also be an SMS material, comprising a spunbonded, a melt-blown and a further spunbonded stratum or layer or any other combination of spunbonded and melt-blown layers, such as a SMMS or SSMMS etc. Examples include one or more layers of fibers with diameters below 1 micron (nanofibers and nanofiber layers); examples of these rise in combinations of SMS, SMNS, SSMNS or SMNMS nonwoven webs (where "N" designates a nanofiber layer). In some examples, permanently hydrophilic non-wovens, and in particular, nonwovens with durably hydrophilic coatings may be desirable. Typically, the suitable non-woven is air permeable. Typically the suitable nonwoven is water or liquid permeable, but may also be water impermeable by reason of fiber size and density, and hydrophobicity of the fibers. Water or liquid permeability may be enhanced by treatments to render the fibers hydrophilic, as discussed below.

The nonwoven web may be formed predominately of polymeric fibers. In some examples, suitable non-woven fiber materials may include, but are not limited to polymeric materials such as polyolefins, polyesters, polyamide, or specifically polypropylene (PP), polyethylene (PE), poly-lactic acid (PLA), polyethylene terephthalate (PET) and/or blends thereof. Nonwoven fibers may be formed of, or may include as additives or modifiers, components such as aliphatic polyesters, thermoplastic polysaccharides, or other biopolymers (bio-based or renewable polymers).

The individual fibers may be monocomponent or multicomponent. The multicomponent fibers may be bicomponent, such as in a core-and-sheath or side-by-side arrangement. Often, the individual components comprise aliphatic polyolefins such as polypropylene or polyethylene, or their copolymers, aliphatic polyesters, thermoplastic polysaccharides or other biopolymers.

Further conventional nonwovens useful in such articles, fiber compositions, formations of fibers and nonwovens and related methods are described in U.S. Pat. No. 6,645,569 to Cramer et al., U.S. Pat. No. 6,863,933 to Cramer et al., U.S. Pat. No. 7,112,621 to Rohrbaugh et al.; co-pending U.S patent application Ser. Nos. 10/338,603 and 10/338,610 by Cramer et al., and 13/005,237 by Lu et al.

Some polymers used for nonwoven fiber production may be inherently hydrophobic, and for certain applications they may be surface treated or coated with various agents to render them hydrophilic. A surface coating may include a surfactant coating. One such surfactant coating is available from Schill & Silacher GmbH, Böblingen, Germany, under the Tradename Silastol PHP 90.

Another way to produce nonwovens with durably hydrophilic coatings, is via applying a hydrophilic monomer and a radical polymerization initiator onto the nonwoven, and conducting a polymerization activated via UV light resulting in monomer chemically bound to the surface of the nonwoven as described in co-pending U.S. Patent Publication No. 2005/0159720.

Another way to produce hydrophilic nonwovens made predominantly from hydrophobic polymers such as polyolefins is to add hydrophilic additives into the melt prior to extrusion.

Another way to produce nonwovens with durably hydrophilic coatings is to coat the nonwoven with hydrophilic nanoparticles as described in co-pending applications U.S. Pat. No. 7,112,621 to Rohrbaugh et al. and in PCT Application Publication WO 02/064877.

Typically, nanoparticles have a largest dimension of below 750 nm. Nanoparticles with sizes ranging from 2 to 750 nm may be economically produced. An advantage of nanoparticles is that many of them can be easily dispersed in water solution to enable coating application onto the nonwoven, they typically form transparent coatings, and the coatings applied from water solutions are typically sufficiently durable to exposure to water. Nanoparticles can be organic or inorganic, synthetic or natural. Inorganic nanoparticles generally exist as oxides, silicates, and/or carbonates. Typical examples of suitable nanoparticles are layered clay minerals (*e.g.*, LAPONITE™ from Southern Clay Products, Inc. (USA), and Boehmite alumina (*e.g.*, Disperal P2™ from North American Sasol. Inc.). According to one example, a suitable nanoparticle coated non-woven is that disclosed in the co-pending patent application Ser. No. 10/758,066 entitled "Disposable absorbent article comprising a durable hydrophilic core wrap" by Ponomarenko and Schmidt.

In some cases, the nonwoven web surface can be pre-treated with high energy treatment (corona, plasma) prior to application of nanoparticle coatings. High energy pre-treatment typically temporarily increases the surface energy of a low surface energy surface (such as PP) and thus enables better wetting of a nonwoven by the nanoparticle dispersion in water.

Notably, hydrophilic non-wovens are also useful in other parts of an absorbent article. For example, topsheets and absorbent core layers comprising permanently hydrophilic non-wovens as described above have been found to work well.

A nonwoven also may include other types of surface coating. In one example, the surface coating may include a fiber surface modifying agent that reduces surface friction and enhances tactile lubricity. Preferred fiber surface modifying agents are described in U.S. Pat. Nos. 6,632,385 and 6,803,103; and U.S. Pat. App. Pub. No. 2006/0057921.

A further type of a nonwoven web as may be employed in absorbent articles may comprise a material that provides good recovery when external pressure is applied and removed. Further, the nonwoven may comprise a blend of different fibers selected, for example from the types of polymeric fibers described above. In some embodiments, at least a portion of the fibers may exhibit a spiral curl which has a helical shape. According to one example, the fibers may include bicomponent fibers, which are individual fibers each comprising different materials, usually a first and a second polymeric material. It is believed that the use of side-by-side bicomponent fibers is beneficial for imparting a spiral curl to the fibers.

In order to enhance softness perceptions of the absorbent article, nonwovens forming the backsheet may be hydroenhanced or hydroengorged. Hydroenhanced/hydroengorged nonwovens are described in U.S. Pats. Nos. 6,632,385 and 6,803,103, and U.S. Pat. App. Pub. No. 2006/0057921.

A nonwoven may also be treated by a "selfing" mechanism. By "selfing" nonwovens, high densities of loops (>150 in 23.25/cm$^2$) may be formed which protrude from the surface of the nonwoven substrate. Since these loops act as small flexible brushes, they create an additional layer of springy loft, which may enhance softness. Nonwovens treated by a selfmg mechanism are described in U.S. Pat. App. Pub. No. US 2004/131820.

The absorbent core generally may be disposed between the topsheet 18 and the backsheet 20. It may include one or more layers, such as a first absorbent layer 60 and a second absorbent layer 62.

The absorbent layers 60, 62 may include respective substrates 64, 72, an absorbent particulate polymer material 66, 74 disposed on substrates 64, 72, and a thermoplastic adhesive material 68, 76 disposed on and/or within the absorbent particulate polymer material 66, 74 and at least portions of the substrates 64, 72 as an adhesive for immobilizing the absorbent particulate polymer material 66, 74 on the substrates 64, 65.

The substrate 64 of the first absorbent layer 60 may be referred to as a dusting layer and has a first surface which faces the backsheet 20 and a second surface which faces the absorbent particulate polymer material 66. Likewise, the substrate 72 of the second absorbent layer 62 may be referred to as a core cover and has a first surface facing the topsheet 18 and a second surface facing the absorbent particulate polymer material 74.

The first and second substrates 64 and 72 may be adhered to one another with adhesive about the periphery to form an envelope about the absorbent particulate polymer materials 66 and 74 to hold the absorbent particulate polymer material 66 and 74 within the absorbent core 14.

The substrates 64, 72 may be of one or more nonwoven materials, and may be liquid permeable.

As illustrated in Fig. 2A, the absorbent particulate polymer material 66, 74 may be deposited on the respective substrates 64, 72 in clusters 90 of particles to form a grid pattern comprising land areas 94 and junction areas 96 between the land areas 94. Land areas 94 are areas where the thermoplastic adhesive material does not contact the nonwoven substrate or the auxiliary adhesive directly; junction areas 96 are areas where the thermoplastic adhesive material does contact the nonwoven substrate or the auxiliary adhesive directly. The junction areas 96 in the grid pattern contain little or no absorbent particulate polymer material 66 and 74. The land areas 94 and junction areas 96 can have a variety of shapes including, but not limited to, circular, oval, square, rectangular, triangular, and the like. First and second layers 60, 62 may be combined to form the absorbent core 14. The foregoing description describes features of an absorbent article, any combination of which can be employed to enhance consumer perceptions of softness of the article. In addition, however, it is believed that the use of a nonwoven web according to the present invention, and using it as a component of an absorbent article including, e.g., a topsheet 18 and/or backsheet 20 (see Figs. 2A, 2B), according to the following description, provides for enhancement of loft of the component, and has synergistic effects with respect to enhancing perceptions of softness of the article as a whole. At the same time, counterintuitively, features described below may enhance tensile strength of the nonwoven web, and consequently, of the topsheet, backsheet or other component formed of it. When attempting to improve softness signals, preserving or enhancing tensile strength of a nonwoven may be of particular interest in absorbent articles for at least two reasons. First, the nonwoven web may typically be required to sustain certain minimum tensile forces and undergo sufficiently low changes in dimension so as to be effectively processable in downstream manufacturing operations. Second, the nonwoven web typically may be a substantial contributor to structural integrity of a backsheet laminate in absorbent products such as disposable diapers, in which the backsheet may be required to sustain forces resulting from application/donning on a wearer (*e.g.*, when a caregiver tugs on fastening members to apply a diaper), wearer movements, and weight and bulk contained and sustained by the backsheet when the diaper is loaded with the wearer's exudates.

As previously noted, referring to Fig. 2B, a backsheet 20 may be formed of a laminate of a nonwoven 21 and a thin polymeric film 23. The nonwoven and film may be bonded in the laminating process by adhesive or any other suitable means. In some examples, the polymeric film may have a thickness of about 0.012 mm (0.5 mil) to about 0.051 mm (2.0 mils). In order to achieve the desired overall visual appearance, the opacity and whiteness of the backsheet laminate may be enhanced by addition of, for example, calcium carbonate ($CaCO_3$) to the film during its formation. Inclusion of fine particles of $CaCO_3$ cause the formation of micropores about the particles upon stretching, or biaxial stretching in processing of the film, which serve to make the resulting film air- and vapor-permeable (thus, "breathable", reducing the likelihood of skin overhydration and thereby reducing the likelihood of conditions such as diaper rash). The $CaCO_3$ particles and the resulting micropores in the film also serve to enhance its opacity.

A nonwoven according to the present invention may be formed from one or more resins of polyolefins, polyesters, polyamide including but not limited to polypropylene (PP), polyethylene (PE), and polyethylene terephthalate (PET), poly-lactic acid (PLA), and blends thereof. Resins including polypropylene may be particularly useful because of polypropylene's relatively low cost and surface friction properties of fibers formed from it (*i.e.,* they have a relatively smooth, slippery tactile feel). Resins including polyethylene may also be desirable because of polyethylene's relative softness/pliability and even more smooth/slippery surface friction properties. Relative each other, PP currently has a lower cost and fibers formed from it have a greater tensile strength, while PE currently has a greater cost and fibers formed from it have a lower tensile strength but greater pliability and a more smooth/slippery feel. Accordingly, it may be desirable to form nonwoven web fibers from a blend of PP and PE resins, finding a balance of the best proportions of the polymers to balance their advantages and disadvantages. The fibers may be formed of PP/PE blends such as described in U.S. Pat. No. 5,266,392. Nonwoven fibers may be formed of, or may include as additives or modifiers, components such as aliphatic polyesters, thermoplastic polysaccharides, or other biopolymers.

The individual fibers may be monocomponent or multicomponent. The multicomponent fibers may be bicomponent, such as in a core-and-sheath or side-by-side arrangement. Often, the individual components comprise aliphatic polyolefins such as polypropylene or polyethylene, or their copolymers, aliphatic polyesters, thermoplastic polysaccharides or other biopolymers.

A batt may be formed from any of these resins by conventional methods, such as carding, meltblowing, spunlaying, airlaying, wet-laying etc. A batt comprises individual fibers, which are usually unbonded to each other, although a certain amount of pre-bonding between fibers may be performed and is also included in the meaning, such as may occur during or shortly after the lay-down of fibers in a spunlaying process, or as may be achieved be a pre-calendering. This pre-bonding, however, still permits a substantial number of the fibers to be freely moveable such that they can be repositioned. A batt may comprise several strata, such as may result from depositing fibers from several beams in a spunlaying process. A preferred execution relates to spunlaying processes, in which the resin(s) are heated and forced under pressure through spinnerets. The spinnerets eject fibers of the polymer(s), which are then directed onto a moving belt; as they strike the moving belt they may be laid down in somewhat random orientations, but often with a machine-direction orientation or bias, to form a spunlaid batt. The batt then may be calender-bonded to form the nonwoven web.

Nonwovens formed of any basis weight may be produced. However, as noted in the background, relatively higher basis weight, while having relatively greater apparent caliper and loft, also has relatively greater cost. On the other hand, relatively lower basis weight, while having relatively lower cost, adds to the difficulty of providing a backsheet that has and sustains a dramatic visual 3-dimensional appearance following compression in a package, and has suitable mechanical properties. It is believed that the combination of features described herein strikes a good balance between controlling material costs while providing a dramatic visual 3-dimensional appearance and suitable mechanical properties. It is believed that the features of consolidating bond shapes and patterns described herein may be particularly useful in applications of nonwovens of relatively low basis weights in some applications, in that it is believed that such features provide a way to enhance loft while reducing, or at least without adding, basis weight. Accordingly, for such applications, a nonwoven having a basis weight from 6.0 to 50 gsm, more preferably from 8.0 to 35 gsm, even more preferably from 9.0 to 25 gsm, and still more preferably from 10 to 20 gsm may be used. When used as a component of an absorbent article such as a topsheet, a lower basis weight nonwoven may provide strikethrough superior to that of a higher basis weight nonwoven. A lower basis weight nonwoven may be preferable to a higher basis weight one when used, for example, as a component of a zero-strain stretch laminate, because it will be more accommodating of an activation/incremental stretching process. In other applications, such as, for example, use of nonwovens to form products such as disposable clothing articles, wipes or dusters, higher basis weights up to 100 gsm, or even 150 gsm, may be desired. It is believed that the features of bonding protrusions, bonding shapes and bonding patterns described herein may have beneficial effects on loft and/or softness perception, even with nonwovens of such higher basis weights. Optimal basis weight is dictated by the differing needs in each application, and cost concerns.

It is believed that for an absorbent article the desired overall visual softness signals of a backsheet laminate may be better achieved when the backsheet laminate is substantially white in color, and has an Opacity of at least 45%, more preferably at least 70%, even more preferably at least 73%, and still more preferably at least 75%, as measured by the Opacity Measurement Method set forth below. Accordingly, it may be desirable to add a white-tinting/opacifying agent also to the polymer(s) forming the polymeric film, and to the polymer(s) supplying the spinnerets used to form the fibers of the nonwoven web.

It may be desirable that a white-tinting/opacifying agent be added to the polymer resin that is spun to make the nonwoven. Adjusting the opacity of the nonwoven web, through addition of an opacifying agent, may be desirable, such that the nonwoven web has an Opacity of at least 10%, more preferably at least 18%, and still more preferably at least 40%.

While a variety of whitening/opacifying agents may suffice, it is believed that titanium dioxide ($TiO_2$) may be particularly effective because of its brightness and relatively high refractive index. It is believed that addition of $TiO_2$ to the polymer(s) from which the fibers are to be formed, in an amount up to 5.0% by weight of the nonwoven, may be effective to achieve the desired results. However, because $TiO_2$ is a relatively hard, abrasive material, inclusion of $TiO_2$ in amounts greater than 5.0% by weight may have deleterious effects, including wear and/or clogging of spinnerets; interruption and weakening of the structure of the fibers and/or calender bonds therebetween; undesirably increasing the surface friction properties of the fibers (resulting in a less smooth tactile feel); and unacceptably rapid wear of downstream processing equipment components. It is believed that the increased opacity provided by whitener helps to produce a visually distinctive, soft appearance of the nonwoven. It also may be desired in some applications that a coloring or tinting agent be added to one or more the polymer resin(s) from which the nonwoven fibers will be spun.

Opacity can also be enhanced by using fiber having cross-sectional shapes other than round and solid (non-hollow) geometries, namely trilobal or multilobal cross-sections, or hollow configurations or combinations thereof. Those non-circular cross-sectional shapes can also provide advantages in terms of loft and compression resilience.

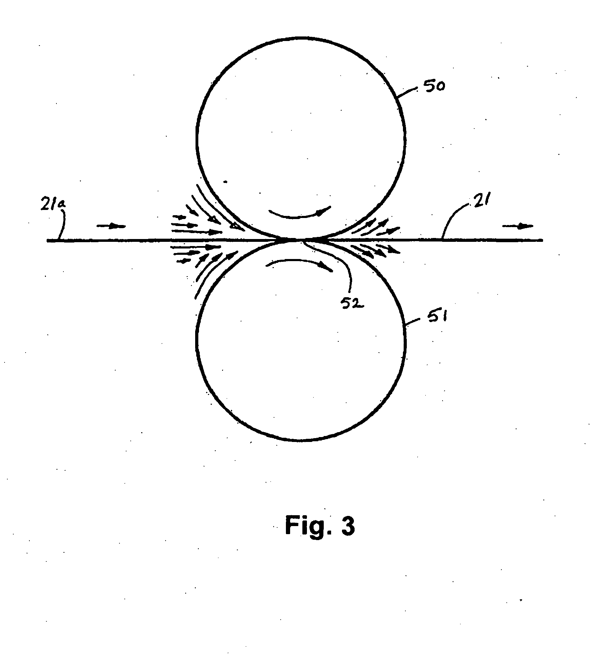

Spunbonding includes the step of calender-bonding the batt of spunlaid fibers, to consolidate them and bond them together to some extent to create the web as a fabric-like structure and enhance mechanical properties e.g., tensile strength, which may be desirable so the material can sufficiently maintain structural integrity and dimensional stability in subsequent manufacturing processes, and in the final product in use. Referring to Fig. 3, calender-bonding may be accomplished by passing the batt 21a through the nip between a pair of rotating calender rollers 50, 51, thereby compressing and consolidating the fibers to form a nonwoven web 21. One or both of the rollers may be heated, so as to promote heating, plastic deformation, intermeshing and/or thermal bonding/fusion between superimposed fibers compressed at the nip. The rollers may form operable components of a bonding mechanism in which they are urged together by a controllable amount of force, so as to exert the desired compressing force/pressure at the nip. In some processes an ultrasonic energy source may be included in the bonding mechanism so as to transmit ultrasonic vibration to the fibers, again, to generate heat energy within them and enhance bonding.

One or both of the rollers may have their circumferential surfaces machined, etched, engraved or otherwise formed to have thereon a bonding pattern of bonding protrusions and recessed areas, so that bonding pressure exerted on the batt at the nip is concentrated at the bonding surfaces of the bonding protrusions, and is reduced or substantially eliminated at the recessed areas. The bonding surfaces have bonding surface shapes. As a result, an impressed pattern of bonds between fibers forming the web, having bond impressions and bond shapes corresponding to the pattern and bonding surface shapes of the bonding protrusions on the roller, is formed on the nonwoven web. One roller such as roller 51 may have a smooth, unpatterned cylindrical surface so as to constitute an anvil roller, and the other roller 50 may be formed with a pattern as described, to constitute a bonding pattern roller; this combination of rollers will impart a pattern on the web reflecting the pattern on the bonding pattern roller. In some examples both rollers may be formed with patterns, and in particular examples, differing patterns that work in combination to impress a combination pattern on the web such as described in, for example, U.S. Pat. No. 5,370,764.

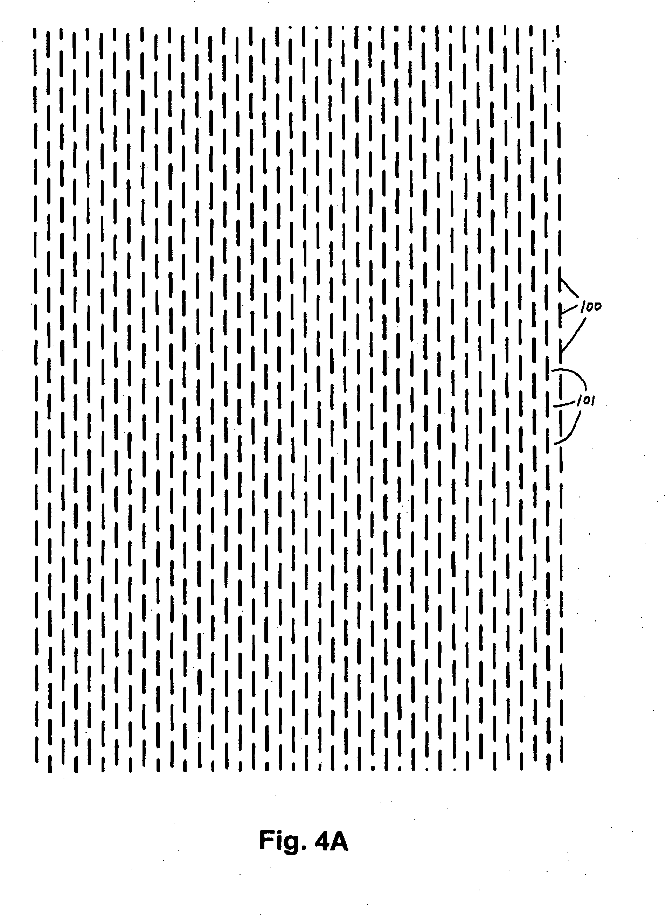

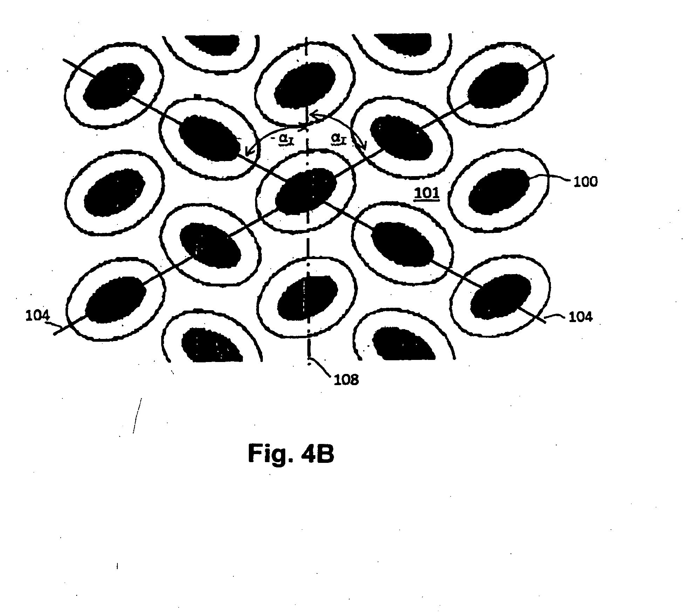

A repeating pattern of bonding protrusions and recessed areas such as, for example, depicted in Fig. 4, may be formed onto a bonding roller 50 (Fig. 3). The rod-shaped bonding shapes 100 depicted in Fig. 4 depict raised surfaces of bonding protrusions on a roller, while the areas between them represent recessed areas 101. The bonding shapes 100 of the bonding protrusions impress like-shaped bond impressions on the web in the calendering process.

The bonding protrusions on a roller will have a height, which may be expressed as a difference between the radius of the roller at the outermost (bonding) surfaces of the bonding protrusions, and the radius of the roller at the recessed areas 101. The height may be adjusted with the objective of minimizing the amount of material that must be removed from the roller surface by machining or etching to create the desired shapes and pattern, while still providing for sufficient clearance between the roller bearing the bonding protrusions and the opposing roller, at the recessed areas 101, to accommodate passage of the batt through the nip in areas of the batt not to be bonded (*i.e.,* at the recessed areas), without substantially compressing it - because maximum loft/caliper is the objective. For webs of the type and basis weight contemplated herein, a bonding protrusion height between 0.3 mm and 1.0 mm may be desired, or more preferably, a bonding protrusion height between 0.5 mm and 0.8 mm, or even a bonding protrusion height between 0.6 mm and 0.7 mm. The bonding surfaces of the bonding protrusions may have an average area between 0.3 $mm^2$ and 10 $mm^2$. The bonding protrusions typically have sides with an angled slope when viewed in cross section through the height thereof.

Nonwoven webs of the type contemplated herein may be calender-bonded at line speed greater than 300 m/min., or 600 m/min., or even 800 m/min., or more, depending upon nonwoven web composition, basis weight, bonding pattern, and equipment and process variables selected. Referring again to Fig. 3, it will be appreciated that at such speeds, the batt 21a and the surfaces of rollers 50, 51 will entrain surrounding air and move it toward the nip 52, as suggested by the arrows. Surface features of a bonding roller 50, as described above, will enhance this effect. It is believed that, as entrained air is carried toward the nip, the decreasing space between the rollers as the nip is approached creates a zone of relatively higher, and increasing, air pressure in front of the nip 52. A portion of the entrained air under such higher pressure will be urged into and further compressed in the nip 52, within the recessed areas of the bonding pattern on the roller, and within the interstices of the fibers passing through the nip. It is believed that, as nonwoven web 21 exits the nip 52, compressed air entrained within the fibers and passing through the nip therewith encounters a zone of relatively lower pressure on the exit side, and accelerates away from the nip in all unobstructed directions as a result. Thus, it is believed that substantial air entrainment, air compression and complex air flows of relatively high velocity occur within and about the batt 21a and web 21 as a result of movement of the batt and rotation of the calender rollers in the calender-bonding process.

It is believed that surface features of a bonding roller including the bonding protrusions affect these air flows. Particularly at the nip, the profiles of bonding protrusions present obstructions to airflow, while the recessed areas between the bonding protrusions present passageways. Thus, it is believed that for certain configurations, shapes, and positions of bonding protrusions, as will be reflected in the bond impressions created in the web, rotational orientation(s) and repeating patterns of the bonding shapes can be selected and formed to have a beneficial effect on these air flows. It is believed, further, that patterns of bonding protrusions having bonding surface shapes with certain features, reflected in the bonding surfaces and the cross sections of the protrusions along planes substantially parallel with the bonding surfaces, rotational orientations relative the plane approximated by the web surface, and spacing, may be employed to channel these air flows in a way that causes them to reposition the fibers during the calender bonding process, such as by teasing or fluffing the fibers, thus providing an enhanced calender-bonded nonwoven web having greater loft/caliper than a similar nonwoven web having other consolidated bond shapes and patterns, all other variables being the same.

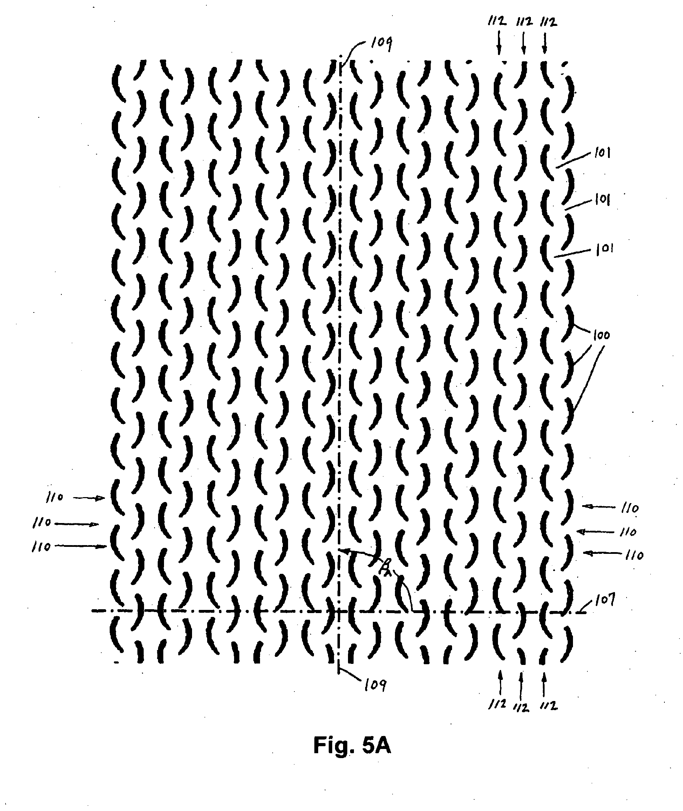

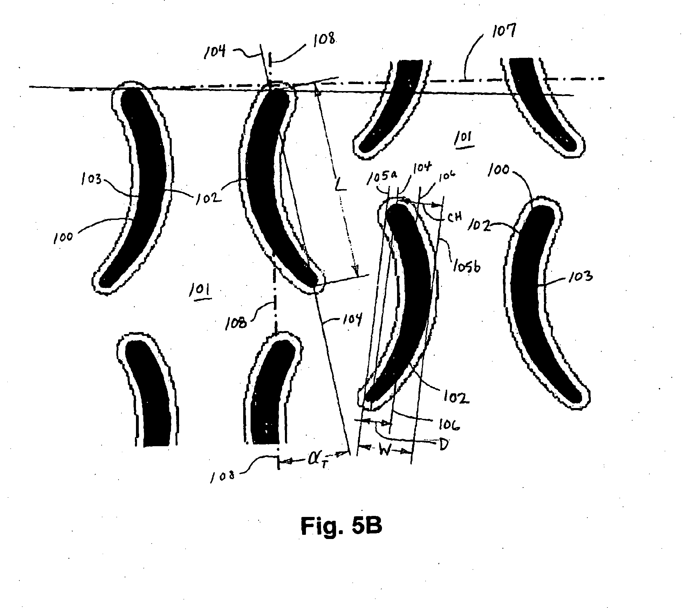

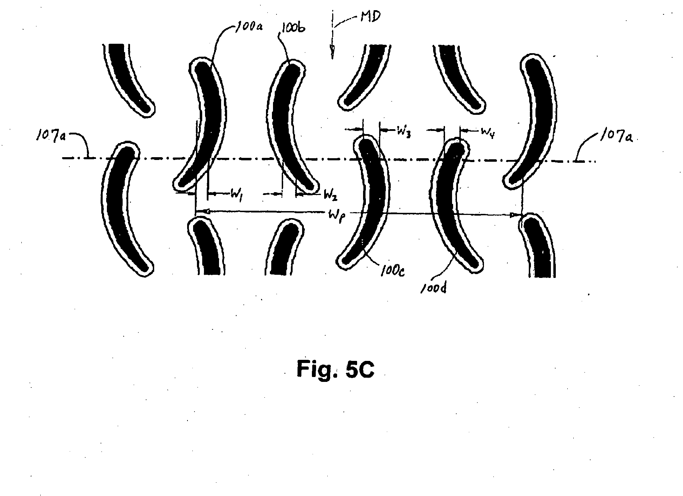

Figs. 5A, 5b and 5C depict one example of a bonding pattern and bonding shapes that will be reflected in bond shapes of bond impressions in a nonwoven web. Bonding shapes 100 represent the shapes of bonding surfaces of bonding protrusions that may be imparted to a bonding roller by etching, machining or other methods. Such bonding protrusions on a bonding roller will impress bond impressions into a web, of like bond shapes, arranged in a like bonding pattern. Without intending to be bound by theory, it is believed that certain aspects and features of the depicted shapes and pattern may have the beneficial effect described above.

Referring to Fig. 5B, the bonding shape 100 has a greatest measurable length L, which is measured by identifying a shape length line 104 intersecting the perimeter of the shape at points of intersection that are the greatest distance apart that may be identified on the perimeter, *i.e.,* the distance between the two farthest-most points on the perimeter. The bonding shape 100 has a greatest measurable width W which is measured by identifying respective shape width lines 105a, 105b which are parallel to shape length line 104 and tangent to the shape perimeter at one or more outermost points that are most distant from shape length line 104 on either side of it, as reflected in Fig. 5b. It will be appreciated that, for some shapes (*e.g.,* a semicircle), one of shape width lines 105a, 105b may be coincident/colinear with shape length line 104. Greatest measurable width W is the distance between shape width lines 105a, 105b. Shapes within the scope of the present invention have an aspect ratio of greatest measurable length L to greatest measurable width W of at least 2.5, more preferably at least 2.7, and even more preferably at least 2.8. The bond shapes and sizes impressed on the nonwoven web will reflect and correspond with the bonding shapes 100 and sizes thereof on the roller.

Still referring to Fig. 5B, a bonding shape 100 may have a shape perimeter with a convex portion 102, lying on one side of the shape length line 104. Fig. 5B shows also that the convex portion may have a varying radius or radii. The varying radius/radii of the convex portion 102 may render the shape perimeter similar to the profile of the camber of an airfoil in cross section. Viewed another way, the cross-sectional profile of an airfoil has a convex portion and is asymmetric about any line or axis that traverses the profile, which can be identified. The convex portion 102 may have a camber height CH measured as the distance between shape length line 104 and the shape width line 105b that is tangent to the convex portion 102. It is believed that, for maximum beneficial impact on airflow, it may be desirable that the ratio between camber height CH and greatest measurable length L be 0.30 or less, more preferably 0.25 or less, but greater than zero. It is believed that a bonding protrusion having a cross section along a plane parallel the bonding surface, fitting this description, repeated and arranged in a pattern, has beneficial effects on acceleration and deceleration of air through nonwoven fibers at and about the nip. Again, the bond shapes and sizes impressed on the nonwoven web will reflect and correspond with the bonding shapes and sizes on the roller.

The shape perimeter may have a convex portion with or without a varying radius on both sides of shape length line 104, such that it has the overall contour of an airfoil with symmetrical camber, in cross section. In another alternative, the shape perimeter may have a convex portion on one side of shape length line 104 and a straight portion on or on the other side of shape length line 104, such that it has the overall contour of an airfoil/aircraft wing with asymmetrical camber, in cross section. In another alternative, the shape perimeter may have a convex portion on one side of shape length line 104 and a concave portion 103, disposed substantially opposite the concave portion, as reflected in Fig. 5B, such that it has the overall contour of an airfoil/aircraft wing with asymmetrical camber and relatively high-loft, low-speed features, in cross section.

The extent of the concavity of concave portion 103 may be quantified by measuring the depth thereof, relative the greatest measurable length. The concavity depth D may be measured by identifying a shape concavity line 106 that is parallel with the shape length line 104 and tangent to the deepest point along the concave portion 103. The concavity depth D is the distance between the shape width line 105a facing the concavity and the shape concavity line 106. The extent of the concavity of concave portion 103 may be expressed as a ratio of concavity depth D to shape length L (hereinafter, "concavity depth ratio"). Although shapes that do not have a concave portion 103 are contemplated, it may be desirable that a bonding shape has a concave portion having a concavity depth ratio between 0.00 and 0.30, more preferably between 0.00 and 0.25, and even more preferably between 0.00 and 0.20. Again, the bond shapes and sizes impressed on the nonwoven web will reflect and correspond with the bonding shapes and sizes on the roller.

Whilst the explanation above refers to bonding protrusions and resulting consolidated bond shapes in the web, which have bonding shape/bond shape perimeters following "convex" and/or "concave" (impliedly, smooth) curves, it may be appreciated that the effect may be substantially realized by approximating such smooth curves with chains of straight line segments. Accordingly, each of the terms "convex" and "concave" herein includes a portion of a shape perimeter formed of a chain of 5 or more straight line segments lying on one side of a shape length line and connected end-to-end, that is each a chord of a smooth convex or concave curve lying on one side of the shape length line, or portion of a curve lying on one side of the shape length line that does not include an inflection point.

Without intending to be bound by theory, it is believed that calender roller bonding protrusions having bonding shapes with one or more features as described above have aerodynamic effects on air flow in and about the nip, that cause acceleration and deceleration of air in and about the interstices of the nonwoven fibers in a way that repositions the fibers, and may effect teasing or fluffing, adding loft and caliper.

Additionally, the rotational orientations of the protrusions affect the orientations of the bonding protrusions at the nip, and it is believed that this has an impact. Bonding shapes 100 and the bonding protrusions supporting them may be arranged along an individual shape tilt angle relative the machine and cross directions. Without intending to be bound by theory, it is believed that the shape tilt angle should not exceed a certain amount for the bonding protrusion to have maximum beneficial effect on air flow. Referring again to Fig. 5B, the shape tilt angle $\alpha_T$ may be expressed as the smaller angle formed by the intersection of an axis along the machine direction 108 and the shape length line 104. It is believed, that the shape and the shape tilt angle have cooperating effects on the air flow. In the case of an asymmetric bonding shape, such as the described airfoil-like shape, it is believed that this asymmetric bonding shape is sufficient for effecting the desired changes in air flow. However, a rotational orientation with a tilt angle of more than zero may enhance the effect. With respect to a bonding shape that is not asymmetric, it is believed that the shape tilt angle $\alpha_T$ provides the desired effects on air flow, such that it then should not be less than 1 degree and should not exceed 40 degrees, more preferably, 30 degrees, and still more preferably, 20 degrees. It is believed that a shape tilt angle within this range effectively provides air flow through the nip, while at the same time, imparts cross-direction vector components to air flows through the nip. Conversely, a shape tilt angle greater than 40 degrees may create too much of an obstruction to air flow through the nip to have a beneficial effect, and even greater shape tilt angles combined with sufficient density of bonding protrusions may have the effect of creating enough obstruction at the nip to substantially divert airflow from the nip, *i.e.,* toward the sides of the bonding rollers, rather than through the nip. The bond shapes and rotational orientations impressed on the nonwoven web will reflect and correspond with the bonding shapes and rotational orientations on the roller.

It is believed that air flows having cross-direction vector components flowing across or through the batt/web as it passes through and exits the nip may urge fibers in the cross-direction, helping add loft, caliper and/or cross direction tensile strength. It will be appreciated that the fibers of many nonwoven batts are laid down in the nonwoven web manufacturing process with a general machine direction orientation or bias, which tends to result in the finished web having relatively greater machine direction tensile strength, and relatively less cross direction tensile strength. Thus, any process that tends to impart some added cross-direction orientation to the fibers prior to bonding may be useful for increasing cross direction tensile strength, bringing about better balance between machine direction tensile strength and cross-direction tensile strength, and adding loft such as by repositioning of the fibers in the z-direction. It is believed that, for best results, it may be even more desirable that shape tilt angle $\alpha_T$ is between 5 degrees and 15 degrees, more preferably between 8 degrees and 12 degrees, and even more preferably between 9 degrees and 11 degrees, for the most beneficial effects on airflow at the line speeds contemplated herein. The rotational orientation of the bonding pattern impressed on the nonwoven web will reflect and correspond with the rotational orientation of the bonding pattern on the roller.

As suggested above, in order to gain the benefit of energy from a substantial mass of air flowing through the nip, it is also believed desirable that a pattern of bonding protrusions not be excessively obstructive of air flow through the nip, nor that it remove too much energy from the air flow by overly slowing, or halting, and absorbing the energy from, forward (machine-direction) momentum of air flows. Referring to Fig. 5C, a nip line 107a along the cross direction is identified along a pattern where the bonding shapes occupy the greatest proportion of distance along a cross direction line that can be identified in a pattern. Thus, nip line 107a located as shown represents a cross-direction line along which bonding protrusions presented the greatest amount of obstruction that can be identified in a particular pattern, to air flow through the nip, during the bonding process. A repeating series of shapes can be identified; in this example, the repeating series consists of the four shapes 100a, 100b, 100c and 100d. Widths $w_1$, $w_2$, $w_3$, and $w_4$ of the identified shapes 100a, 100b, 100c, 100d in the repeating series reflect restriction of air flow along the nip line 107a. Width $w_p$ is the width of the entire repeating series, including the distances between the bonding shapes. The proportion of maximum restriction along the nip length for the pattern is reflected by the ratio $(w_1 + w_2 + w_3 + w_4 \ldots + w_n)/ w_p$, referred to herein as the nip airflow restriction ratio (where "w" is the cross-direction width along the nip line 107a of a bonding shape perimeter, and "n" is the number of bonding shapes along nip line 107a that make up a repeating series). In order that a bonding pattern allows for effective air flow through the nip in order to take advantage of energy of moving air, it may be desirable that the nip airflow restriction ratio be 0.40 or less, more preferably 0.30 or less, and even more preferably 0.25 or less. The bond shapes, rotational orientations and density/numerosity per unit surface area of bond impressions on the nonwoven web will reflect and correspond with the bonding shapes, rotational orientations and density/numerosity per unit surface area of bonding protrusions on the roller, and thus, also reflect the airflow restriction ratio.

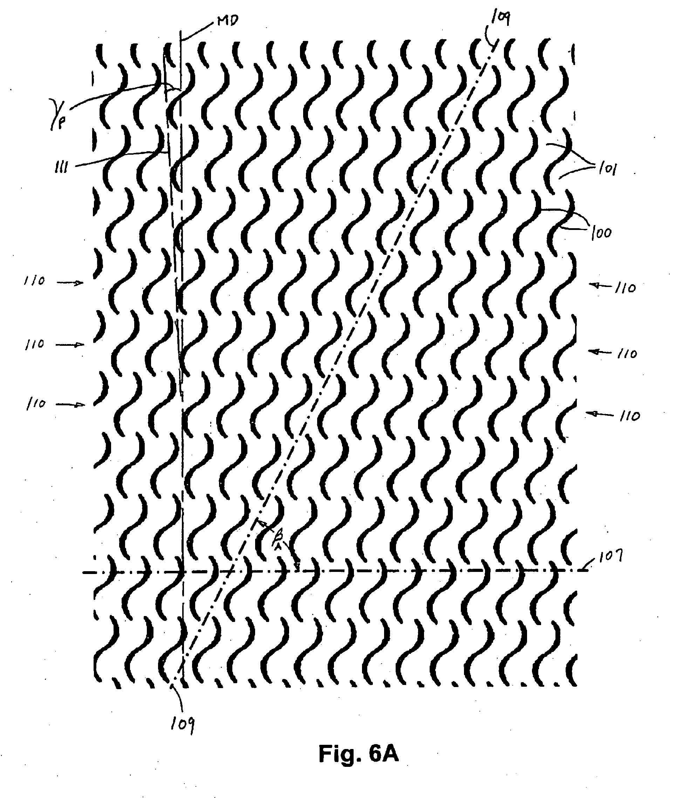

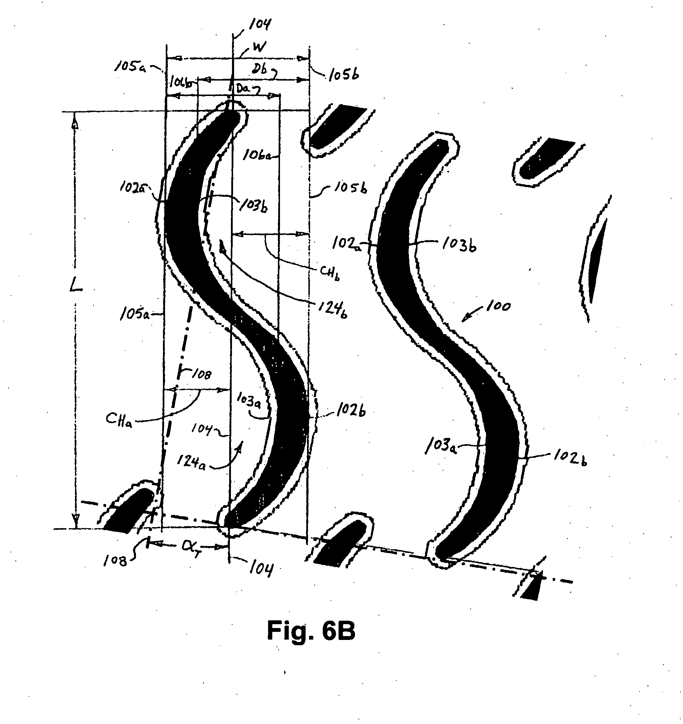

Referring to Figs. 6A and 6B, an alternative bonding pattern is depicted. The repeated bonding shape 100 and profile of the associated bonding protrusion is a composite of a pair generally convex/concave sub-shapes joined or superimposed at their respective tips, in reversed orientation, to form an open "S" shape which is rotationally symmetric about this juncture of the component sub-shapes, respectively its middle inflection point. It will be appreciated, however, that the depicted repeated "S" shape may have several of the features of the bonding shape depicted in Figs. 5A and 5B, described above, which are believed to be beneficial. The depicted bonding shape 100 in Figs. 6A and 6B has a greatest measurable length L and greatest measurable width W, measured with respect to shape length line 104 and shape width lines 105a, 105b, identified in the manner described above. As set forth above, bonding shapes 100 within the scope of the present invention have an aspect ratio of greatest measurable length L to greatest measurable width W of at least 2.5, more preferably at least 2.7, and even more preferably at least 2.8.

The depicted bonding shape in Figs. 6A and 6B also has convex portions 102a, 102b along its perimeter. One or both of the convex portions 102a, 102b may have varying radii, and have camber heights $CH_A$ and $CH_B$. It is believed that, for maximum beneficial impact on airflow, it may be desirable that the ratio between camber height CH and the greatest measurable length L also be 0.30 or less, more preferably 0.25 or less, but greater than zero.

The depicted bonding shape also has concave portions 103a and 103b along its perimeter. Concavity depth Da is the distance between shape width line 105a facing concavity 103a, and shape concavity line 106a. Concavity depth Db is the distance between shape width line 105b facing concavity 103b, and shape concavity line 106b. Although bonding shapes that do not have a concave portion 103a, 103b along their perimeters are contemplated, it may be desirable that a bonding shape perimeter has one or more concave portions such as concave portions 103a, 103b having a concavity depth ratio:

$$\text{Concavity depth} / (L*nc) \leq 0.30, \text{ more preferably } 0.25, \text{ and even more preferably } 0.20,$$

where nc is the number of fully enclosed shapes that are defined by portions of the bonding shape perimeter and the shape length line, which evidence concavities. For example, for the "S" shape shown in Fig. 6B, nc = 2 because there are 2 such fully enclosed shapes 124a and 124b.

The shapes 100 in Figs. 6A and 6B also may have a shape tilt angle $\alpha_T$ determined as set forth above, and within the ranges set forth. The geometric features of the bond shapes and pattern on the nonwoven web will reflect and correspond with those of the shape, size, rotational orientation, density and arrangement of the bond shapes 100.

It is also believed that arranging the bonding protrusions in a pattern such that a relatively straight, unobstructed passageway between them exists along recessed areas 101 at the nip, at least partially along the machine direction, may have beneficial effects. Referring to Figs. 5A and 6A, it can be seen that each example has a cross-nip airflow line 109 that can be identified, that intersects no bonding shape, and intersects a cross direction axis 107 at an angle such that it has a machine direction vector component. Cross-nip airflow line 109 intersects cross direction axis 107 to form a smaller angle, identified herein as cross-nip airflow angle $\beta_A$. It is believed that cross-nip airflow angle $\beta_A$ is preferably greater than 45 degrees, more preferably between 50 degrees and 90 degrees, and even more preferably between 60 degrees and 90 degrees. It is believed desirable that cross-nip airflow line 109 should extend indefinitely without intersecting a bonding shape 100, but at a minimum, past at least 8 rows 110 of bonding shapes 100 without intersecting a bond shape. Again, geometric features of the bond shapes and pattern on the nonwoven web will reflect and correspond with those of the shape, size, rotational orientation, density and arrangement of the bond shapes 100.

Another aspect of the bonding shapes and patterns depicted in Figs. 5A-7 is that they may have any combination of the above-described aspect ratios, maximum nip airflow restriction ratio (0.40 or less), shape asymmetry, shape tilt angles, and other features, and may also reflect use of adjacent pairs of bonding protrusions that define air passageways through the nip that alternately narrow and widen, or converge and diverge, in the manner of a venturi. Without intending to be bound by theory, it is believed that such venturi passageways have the effect of causing localized zones of acceleration and deceleration, and increases and decreases in pressure, as well as turbulence, of air as it passes through the nip. It is believed that these effects serve to tease and/or fluff the fibers of the batt and web about the nip.

For purposes of downstream handling and manufacturing processes, it may be desirable to ensure that no line along the machine direction exists along the nonwoven web surface that is indefinitely long without intersecting a bond impression. This condition (indefinitely long machine direction strip of web without bonds) may result in relatively long lengths of unbonded fibers that may be prone to moving away from a cutting knife in downstream machine direction web slitting operations, resulting in a poorly defined or sloppy slit edge. Additionally, such long, unbonded fibers may also separate from a manufactured edge or slit edge of the web (fraying), which may cause other difficulties in downstream operations. To avoid this condition, it may be desirable to impart a pattern angle $\gamma_P$ to the bonding pattern. Referring to Fig. 6A, pattern angle $\gamma_P$ may be expressed as the smaller angle formed by the intersection of a line connecting like points on repeating, similarly oriented shapes in columns 112, and a machine direction axis. To avoid the above-mentioned problems, it may be desirable that pattern angle $\gamma_P$ be greater than 0 degrees. A pattern angle greater than 0 degrees will ensure that an indefinitely long machine direction strip of web without bonds will not exist. To avoid creating complications with respect to the air flow benefits of the pattern, however, it may be desirable to limit pattern angle $\gamma_P$ to 4 degrees or less, more preferably 3 degrees or less, and even more preferably 2.5 degrees or less. Again, features of the bond pattern on the nonwoven web including pattern angle will reflect and correspond with those of the pattern and

pattern angle $\gamma_P$ on the roller.

The features described above apply to the shapes of bonding surfaces of bonding protrusions in a pattern on a bonding roller, and it will be understood that these features are impressed by the roller into the nonwoven batt to form bond impressions having bond shapes and bonds thereat, to form the calender-bonded nonwoven web. As impressed into a nonwoven web, the bonding shapes are reflected as bond shapes, and are identifiable, and measurable in the web, in laminates that include such nonwoven web as a composite layer, and in composite products made from such nonwoven web and/or such laminates.

An additional aspect that it believed important is bonding area of a roller, reflected in bond area on the web. Imagining a pattern of bonding surfaces having shapes reflected in Figs. 5A and 6A impressed on a surface of a nonwoven web, bonding area and bond area is the area occupied by the bonding shapes on the roller and bond shapes impressed on the surface of the web. In the field of nonwoven web manufacturing, bonding area is often expressed as a percentage, calculated as:

$$\text{Bonding area} = [(\text{bonding area within a surface area unit}) / (\text{total surface area of the surface area unit})] * 100\%.$$

The bonding area reflects the combination of bonding protrusion density (number of bonding protrusions per unit surface area) and average surface area of the bonding shapes 100 in the unit surface area. Thus, increasing the number of bonding protrusions and/or increasing the surface area of the individual bond shapes 100 increases the bonding area, and *vice versa.* It is believed that bonding area has an impact on the entrainment of air as well as the proportion of entrained air carried toward the nip, which will pass through the nip. If bonding area is relatively greater, this means that more and/or larger bonding protrusions are present at the nip point at any time to obstruct air flow through the nip; conversely, if bonding area is relatively less, this means that fewer and/or smaller bonding protrusions are present at the nip point at any time to obstruct air flow through the nip. Bond area has another effect as well. Increasing bond area increases the number and proportion of the fibers in the nonwoven web that are bonded together, and *vice versa.* Within a certain range of bond area, tensile strength of the nonwoven web in the machine and/or cross directions may be increased by increasing the bond area. However, bending stiffness of the nonwoven web may be correspondingly increased, and loft decreased - compromising the soft feel and/or appearance of the nonwoven. In order to best realize the benefits of air flow, air compression and channeling believed to be occurring through use of the bond shapes described herein, enhancing loft, while still imparting satisfactory tensile properties to the web, it is believed that bonding area should be in the range of 4.0% and 18%, more preferably between 6 % and 16%, and even more preferably between about 8 % and 14%. At the line speeds contemplated herein, and relative to the bonding area, the average surface area per bonding shape affects bonding area and bonding protrusion density. It is believed desirable that the average bonding shape 100 surface area be in the range of 0.3 $mm^2$ and 10 $mm^2$. Correspondingly, it is believed desirable that the density of the bonding protrusions, and correspondingly, the impressed bond shapes, be between 0.4 bonding protrusions/$cm^2$ for bonding shape/bond shape area of 10 $mm^2$ at 4% bonding area, and 60 bonding protrusions/$cm^2$ for bonding shape/bond shape area of 0.3 $mm^2$ at 18 % bonding area. Similar calculations of bonding protrusion density and average bond shape surface area to arrive at the bond areas in the ranges set forth above, will be appreciated. The surface area and density of bond shapes impressed on the nonwoven web will reflect and correspond with those of the bonding shapes, and thus, the bond area on the web will reflect and correspond with the bonding area on the roller as well.

It is also believed that the speed of travel of the batt toward the bonding nip (batt line speed) is important. It will be appreciated that, if the batt line speed is too slow, air mass entrained by the batt as it approaches the nip will not have sufficient linear momentum to maintain a large enough zone of sufficiently elevated air pressure at the entry side effective to ensure that substantial air mass is urged through the nip, rather than being merely urged around the nip and the rollers along alternate pathways. Accordingly, it is believed that line speed at which the batt is conveyed toward the nip should be equal to or greater than 300 meters/minute, more preferably, equal to or greater than 600 meters/minute, and even more preferably, equal to or greater than 800 meters/minute.

It is believed that use of a calender roller having bonding patterns and bonding shapes as described herein take advantage of air flows resulting from entrainment of air along a moving nonwoven batt and calender rollers, and air compression, that occur during calender-bonding, in a way that causes the resulting nonwoven web to have enhanced loft and a soft feel. It is believed also that the bonding shapes need not be all of like kind or rotational orientation, but rather, that suitable combinations of differing shapes including bonding shapes having features as described herein, and optionally, in combination with other shapes, may be used and included. Employment of the described features may reduce or eliminate a need for other loft enhancement processes, such as hydroengorgement or hydroentanglement - which may save costs of additional equipment and operation.

**Examples**

In following examples for the manufacture of nonwoven webs, if it is not defined differently, the batt was produced from 3 following spunbond beams on REICOFIL 4 technology, using the four different bonding patterns:.

Pattern **"Wing-shape"** according the invention (Fig. 5)

- Bonding area percentage = 12,4%
- Bonding protrusions / $cm^2$ = 3,1
- Angle $\alpha_T$ = 10°
- Angle $\beta_A$ = 90°
- Angle $\gamma_P$ = 1°
- L = 6,2 mm
- W = 1,7 mm
- D = 0,9mm
- CH = 1,4 mm
- Distance between beginning of repeating shapes in columns = 8 mm
- Distance between beginning of repeating shapes in rows = 8 mm
- Bonding protrusion height = 0,65 mm

Pattern **"S-shape"** according to the invention (Fig. 6)

- Bonding area percentage = 12,9%
- Bonding protrusions / $cm^2$ = 1,5
- Angle $\alpha_T$ = 10°
- Angle $\beta_A$ = 60°
- Angle $\gamma_P$ = 1°
- L = 12,2 mm
- W = 4,0 mm
- $D_A$ = 3,1 mm
- $D_B$ = 3,1 mm
- $CH_A$ = 1,9 mm
- $CH_B$ = 2,1 mm
- Distance between beginning of repeating shapes in columns = 11,4 mm
- Distance between beginning of repeating shapes in rows = 6,0 mm
- Bonding protrusion height = 0,65 mm

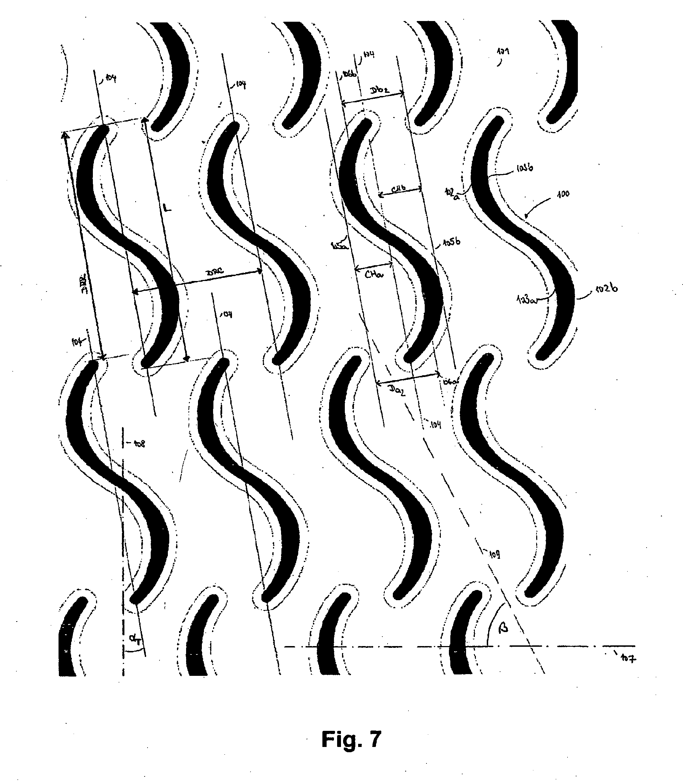

Pattern **"S-shape v2"** according to the invention (Fig. 7)

- Bonding area percentage = 13 %
- Bonding protrusions / $cm^2$ = 2,4
- Angle $\alpha_T$ = 10°
- Angle $\beta_A$ = 63°
- Angle $\gamma_P$ = 1°
- L = 9,2 mm
- W = 3,0 mm
- $D_A$ = 2,3 mm
- $D_B$ = 2,3 mm
- $CH_A$ = 1,3 mm
- $CH_B$ = 1,6 mm
- Distance between beginning of repeating shapes in columns (DRC) = 8,8 mm
- Distance between beginning of repeating shapes in rows (DRR) = 4,65 mm
- Bonding protrusion height = 0,75 mm

Comparative pattern **"Standard bulky"** described in patent application WO 2009/021473 (Fig. 4A).

- Bonding area percentage = 14,0%
- Bonding protrusions / $cm^2$ = 9

- Angle $\alpha_T$ = 0°
- Angle $\beta_{A1}$ = 90°
- Angle $\beta_{A2}$ = 55°
- Angle $\gamma_P$ = 0°
- L=3,4mm
- W = 0,4 mm
- D = 0 mm
- CH = 0,2 mm
- Distance between beginning of repeating shapes in columns = 5,6 mm
- Distance between beginning of repeating shapes in rows = 2,0 mm
- Bonding protrusion height = 0,7 mm

Comparative pattern **"Standard"** - Pattern U2888 of Ungricht GmbH, Germany (oval shape, Fig. 4B)

- Bonding area percentage = 18,1%
- Bonding protrusions / cm$^2$ = 49,9
- Angle $\alpha_T$ = 60°
- Angle $\beta_A$ - does not exist
- Angle $\gamma_P$ = 0°
- L = 0,9 mm
- W = 0,5 mm
- D - does not exist
- CH = 0,3 mm
- Distance between beginning of repeating shapes in columns 1,5 mm
- Distance between beginning of repeating shapes in rows = 2,6 mm
- Bonding protrusion height = 0,6 mm

The key parameter and test results for the examples are summarized in Table 1 herein below.

**Example 1- comparative standard bulky**

The 12gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised comparative pattern "Standard bulky" (Fig 4A). The temperature of the calender rollers (smooth roller / patterned roller) is 165°C/ 168°C and the pressure is 75 N/mm.

**Example 2- comparative standard bulky**

A 14 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised comparative pattern "Standard bulky" (Fig. 4A). The temperature of the calender rollers (smooth roller / patterned roller) is 165°C/168°C and the pressure is 75 N/mm.

**Example 3 - comparative standard bulky**

A 15 gsm spunmelt type nonwoven batt produced online in a continuous process from polypropylene (Mosten NB425 from Unipetrol), where mono component polypropylene filaments with a fibre diameter of 15-25 $\mu$m are produced and subsequently collected on a moving belt. To increase strength a patterned calender is used consisting of a pair of heated rollers, where one roller has raised comparative pattern "Standard bulky" (Fig. 4A). The temperature of the calender rollers (smooth roller / patterned roller) is 168°C/171°C and the pressure is 75 N/mm.

**Example 4 - comparative standard bulky**

A 17 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised comparative pattern "Standard bulky" (Fig. 4A). The temperature of the calender rollers (smooth roller / patterned roller) is 168°C/171°C and the pressure is 75 N/mm.

**Example 5 - comparative standard**

A 15 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised comparative pattern "Standard" (Fig. 4B). The temperature of the calender rollers (smooth roller / patterned roller) is 170°C/173°C and the pressure is 95 N/mm.

**Example 6 - comparative standard**

A 17 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised comparative pattern "Standard" (Fig. 4B). The temperature of the calender rollers (smooth roller / patterned roller) is 170°C/173°C and the pressure is 95 N/mm.

**Example 7 - comparative standard**

A 15 gsm spunmelt type nonwoven batt, produced using a continuous online process from polypropylene (HH 450 FB from Borelais) and polylactic acid (Ingeo 6202D from NatureWorks), where first the bicomponent core/sheath type filaments are produced, where the core representing 80% is from polylactic acid and the sheath is from polypropylene. The individual filaments a fibre diameter of 10-20 $\mu$m are collected on a moving belt. The batt was produced on REICOFIL 3 technology from 1 beam.
To increase strength a patterned calender is used, that consist of a pair of heated rollers, where one roller has raised comparative pattern "Standard" (Fig. 4B). The temperature of the calender rollers (smooth roller / patterned roller) is 140°C/140°C and the pressure is 75 N/mm.

**Example 8 - comparative standard**

The 15 gsm spunmelt type nonwoven batt produced online in a continuous process from a mixture of polypropylene (Mosten NB425 from Unipetrol) and copolymer (Vistamaxx 6102 from Exxon) in the weight ratio 81:19, where monocomponent polypropylene filaments with a fibre diameter of 15-25 $\mu$m are produced and subsequently collected on a moving belt. The batt was produced on REICOFIL 3 technology from 2 beams.
To increase strength a patterned calender is used consisting of a pair of heated rollers, where one roller has raised comparative pattern "Standard" (Fig. 4B). The temperature of the calender rollers (smooth roller / patterned roller) is 145°C/145°C and the pressure is 75 N/mm.

**Example 9 - "S" shape**

A 12 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "S-shape" according to the invention (Fig. 6). The temperature of the calender rollers (smooth roller / patterned roller) is 165°C/168°C and the pressure is 75 N/mm.

**Example 10 - "S" shape**

A 14 gsm spunmelt type nonwoven batt produced online in a continuous process from a mixture of polypropylene (Mosten NB425 from Unipetrol) and colour masterbatch (Sanylene white PPRC 70 from Clariant) in the weight ratio 99.5:0.5, where monocomponent polypropylene filaments with a fibre diameter of 15-25 $\mu$m are produced and subsequently collected on a moving belt. To increase strength a patterned calender is used consisting of a pair of heated rollers, where one roller has raised pattern "S-shape" according to the invention (Fig. 6). The temperature of the calender rollers (smooth roller / patterned roller) is 165°C/168°C and the pressure is 75 N/mm.

### Example 11 - "S" shape

A 15 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "S-shape" according to the invention (Fig. 6). The temperature of the calender rollers (smooth roller / patterned roller) is 168°C/171°C and the pressure is 75 N/mm.

### Example 12 - "S" shape

A 17 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "S-shape" according to the invention (Fig. 6). The temperature of the calender rollers (smooth roller / patterned roller) is 168°C/171 °C and the pressure is 75 N/mm.

The strengthened nonwoven web is then subsequently impregnated with a hydrophilic surfactant (Silastol PHP 90 from Schill and Seilacher) using a dip roller (kiss-roll) and dried. The extra weight of the surfactant in dry form is approximately 0.4%.

### Example 13 - "S" shape

A 17 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "S-shape" according to the invention (Fig. 6). The temperature of the calender rollers (smooth roller / patterned roller) is 168°C/171°C and the pressure is 75 N/mm.

### Example 14 - "wing" shape

A 12 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "wing-shape" according to the invention (Fig. 5). The temperature of the calender rollers (smooth roller / patterned roller) is 165°C/168°C and the pressure is 75 N/mm.

### Example 15 - "wing" shape

A 14 gsm spunmelt type nonwoven batt produced online in a continuous process from a mixture of polypropylene (Mosten NB425 from Unipetrol) and colour masterbatch (CC10031739BG green from PolyOne) in the weight ratio 99.3:0.7, where monocomponent polypropylene filaments with a fibre diameter of 15-25 $\mu$m are produced and subsequently collected on a moving belt. To increase strength a patterned calender is used consisting of a pair of heated rollers, where one roller has raised pattern "S-shape" according to the invention (Fig. 5). The temperature of the calender rollers (smooth roller / patterned roller) is 165°C/168°C and the pressure is 75 N/mm.

### Example 16 - "wing" shape

A 15 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "wing-shape" according to the invention (Fig. 5). The temperature of the calender rollers (smooth roller / patterned roller) is 168°C/171°C and the pressure is 75 N/mm.

### Example 17 - "wing" shape

A 17 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "wing-shape" according to the invention (Fig. 5). The temperature of the calender rollers (smooth roller / patterned roller) is 168°C/171°C and the pressure is 75 N/mm.

The strengthened nonwoven web is then subsequently impregnated with a hydrophilic surfactant (Silastol PHP 90 from Schill and Seilacher) using a dip roller (kiss-roll) and dried. The extra weight of the surfactant in dry form is approximately 0.4%.

### Example 18 - "wing" shape

A 17 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. To increase strength a patterned calender is used consisting of a pair of heated rollers, where one roller has raised pattern "wing-shape" according to the invention (Fig. 5). The temperature of the calender rollers (smooth roller / patterned roller) is 168°C/171°C and the pressure is 75 N/mm.

### Example 19 - "wing" shape

A 15 gsm spunmelt type nonwoven batt, produced using a continuous online process from polypropylene (Mosten NB425 from Unipetrol) and polyethylene (Liten LS87 from Unipetrol), where first the bicomponent core/sheath type filaments are produced, where the core representing 50% is from polypropylene and the sheath is from polyethylene. The individual filaments with a fibre diameter of 15-25 $\mu$m are collected on a moving belt.

To increase strength a patterned calender is used, that consist of a pair of heated rollers, where one roller has raised pattern "wing-shape" according to the invention (Fig. 5). The temperature of the calender rollers (smooth roller / patterned roller) is 154°C/154°C and the pressure is 75 N/mm.

### Example 20 - "S - shape v2"

A 25 gsm spunmelt type nonwoven batt, produced using a continuous online process from polypropylene (Mosten NB425 from Unipetrol) and polyethylene (Liten LS87 from Unipetrol), where first the bicomponent side/side type filaments are produced, where the one side representing 50% is from polyethylene and the second side is from polypropylene. The individual filaments with a fibre diameter of 15 - 25 $\mu$m are collected on a moving belt. The batt was produced from two beams REICOFIL 3 technology.

To increase strength a patterned calender is used, that consist of a pair of heated rollers, where one roller has raised pattern "S-shape v2" (Fig. 7). The temperature of the calender rollers (smooth roller / patterned roller) is 152°C%142°C and the pressure is 60 N/mm.

### Example 21- "S - shape v2"

A 15 gsm spunmelt type nonwoven batt produced online in a continuous process from polypropylene (Mosten NB425 from Unipetrol), where monocomponent polypropylene filaments with a fibre diameter of 15-25 $\mu$m are produced and subsequently collected on a moving belt. The batt was produced from two beams on REICOFIL 3 technology.

To increase strength a patterned calender is used consisting of a pair of heated rollers, where one roller has raised pattern "S-shape v2" according to the invention (Fig. 7). The temperature of the calender rollers (smooth roller / patterned roller) is 150°C/145°C and the pressure is 70 N/mm.

### Example 22 - "S - shape v2"

A 25 gsm spunmelt type nonwoven batt, produced using a continuous online process from polypropylene (Mosten NB425 from Unipetrol) and copolymer (Vistamaxx 6202 from Exxon) in the weight ratio 84:16 where first the monocomponent type filaments are produced. The individual filaments a with a fibre diameter of 15 - 25 $\mu$m are collected on a moving belt. The batt was produced from two beams on REICOFIL 3 technology.

To increase strength a patterned calender is used, that consist of a pair of heated rollers, where one roller has raised pattern "S-shape v2" (Fig. 7). The temperature of the calender rollers (smooth roller / patterned roller) is 158°C/155°C and the pressure is 70 N/mm.

| | Pattern | NW | Modified thickness | Volume mass | Handle O meter – MD | Tensile strength MD/CD ratio | Strike through time (STT) |
|---|---|---|---|---|---|---|---|
| Mes. unit | | | mm | kg/m3 | mN | - | S |
| Example 1 | Comparative standard bulky | 12gsm PP-SSS | 0.21 | 57.1 | 36.0 | 3.07 | >20 |
| Example 2 | | 14gsm PP-SSS | 0.23 | 60.9 | 40.0 | 2.64 | >20 |
| Example 3 | | 15gsm PP-SSS | 0.24 | 62.5 | 46.6 | 2.50 | >20 |
| Example 4 | | 17gsm PP-SSS | 0.26 | 65.4 | 61.0 | 2.51 | >20 |
| Example 5 | Comparative standard | 15gsm PP-SSS | 0.17 | 88.2 | 48.0 | 2.0 | > 20 |
| Example 6 | | 17gsm PP-SSS | 0.20 | 85.0 | 64.0 | 2.0 | > 20 |
| Example 7 | | 15 gsm BICO PLA/PP-S | 0.19 | 79.0 | 61.0 | 1.6 | >20 |
| Example 8 | | 15 gsm mono PP+copolymer-SS | 0.20 | 75.0 | 21.2 | 2.3 | >20 |
| Example 9 | "S" shape | 12gsm PP-SSS | 0.23 | 52.2 | 33.8 | 2.40 | >20 |
| Example 10 | | 14gsm PP-SSS | 0.26 | 53.8 | 36.5 | 2.14 | >20 |
| Example 11 | | 15gsm PP-SSS | 0.27 | 55.6 | 41.9 | 2.08 | >20 |
| Example 12 | | 17 gsm PP-SSS hydrophilic | 0.29 | 58.6 | 53.9 | 1.99 | 3.3 |
| Example 13 | | 17gsm PP-SSS | 0.29 | 58.6 | 53.9 | 1.99 | >20 |
| Example 14 | "wing" shape | 12gsm PP-SSS | 0.22 | 54.5 | 30.4 | 2.76 | >20 |
| Example 15 | | 14gsm PP-SSS | 0.25 | 56.0 | 34.6 | 2.26 | >20 |
| Example 16 | | 15gsm PP-SSS | 0.26 | 57.7 | 41.6 | 2.21 | >20 |

| | Pattern | NW | Modified thickness | Volume mass | Handle O meter – MD | Tensile strength MD/CD ratio | Strike through time (STT) |
|---|---|---|---|---|---|---|---|
| Mes. unit | | | mm | kg/m3 | mN | - | S |
| Example 17 | | 17 gsm PP-SSS hydrophilic | 0.29 | 58.6 | 46.0 | 2.21 | 3.2 |
| Example 18 | | 17gsm PP-SSS | 0.29 | 58.6 | 46.7 | 2.21 | >20 |
| Example 19 | "wing" shape | 15 gsm BICO PP/PE SSS | 0.28 | 53.6 | 30.2 | 2.11 | >20 |
| Example 20 | "S" shape v2 | 25 gsm BICO PP/PE side/side-SS | 0,39 | 69,4 | 53,0 | 1,90 | >20 |
| Example 21 | "S" shape v2 | 15 gsm PP-SS | 0,29 | 53,6 | 44,1 | 1,81 | >20 |
| Example 22 | "S" shape v2 | 25 gsm PP+copolymer-SS | 0,37 | 74,0 | 56,3 | 1,93 | >20 |

Table 1

## Test methods

The **"basis weight"** of a nonwoven web is measured according to the European standard test EN ISO 9073-1:1989 (conforms to WSP 130.1). There are 10 nonwoven web layers used for measurement, sample size 10x10 cm$^2$.

The **"thickness"** of a nonwoven web is measured according to the European standard test EN ISO 9073-2:1995 (conforms to WSP 120.6) with following modification: the overall weight of upper arm of the machine including added weight is 130 g.

The **"MD/CD ratio"** is the ratio of material's tensile strength at peak in the MD and CD direction. Both were measured according to the EDANA standard method WSP 110.4-2005, where sample width is 50 mm, jaw distance is 100 mm, speed 100 mm/min and preload 0,1N. MD/CD ratio [-] = tensile strength at peak in MD[N/5cm] / tensile strength at peak in CD[N/5cm]

The **"softness"** of a nonwoven web may be measured using to the **"Handle-O-Meter"** test. The test used herein is the INDA IST 90.3-01. The lower the value, the softer is the web.

The **"volume mass"** is the ratio of basis weight and thickness and indicates the bulkiness and fluffiness of the product, which are important qualities of the nonwoven web according to the invention. The lower the value, the bulkier is the web.

$$\text{Volume mass } [kg/m^3] = \text{basis weight } [g/m^2] \text{ / thickness } [mm].$$

The **"hydrophilic properties"** of a nonwoven web may be measured using the **"Strike Through Time"** test. The test used herein is the EDANA standard test WSP 70.3-2005 The lower the value, the more hydrophilic is the web.

The **"opacity"** of a material is the degree to which light is blocked by that material. A higher opacity value indicates a higher degree of light block by the material. Opacity may be measured using a 0° illumination / 45° detection, circumferential optical geometry, spectrophotometer with a computer interface such as the HunterLab LabScan XE running Universal Software (available from Hunter Associates Laboratory Inc., Reston, VA). Instrument calibration and measurements are made using the standard white and black calibration plates provided by the vendor. All testing is performed in a room maintained at about 23 ± 2 °C and about 50 ± 2 % relative humidity.

Configure the spectrophotometer for the XYZ color scale, D65 illuminant, 10° standard observer, with UV filter set to nominal. Standardize the instrument according to the manufacturer's procedures using the 1.20 inch (0.03m) port size and 1.00 inch (0.025m) area view. After calibration, set the software to the Y opacity procedure.

To obtain the specimen, lay the sample flat on a bench, body facing surface downward, and measure the total longitudinal length of the article. Note a site 33% of the total length from the front waist of the article along the longitudinal axis and a second site, 33% of the total length from the back waist of the article. Carefully remove the backsheet laminate, consisting of both the film and nonwoven web, from the garment-facing side of the article. A cryogenic spray, such as Cyto-Freeze (obtained from Control Company, Houston, TX), may be used to separate the backsheet laminate from the article. Cut a piece 50.8 mm by 50.8 mm centered at each site identified above. Precondition samples at about 23 °C ± 2 C° and about 50% ± 2% relative humidity for 2 hours prior to testing.

Place the specimen over the measurement port. The specimen should completely cover the port with the surface corresponding to the garment-facing surface of the article directed toward the port. Cover the specimen with the white standard plate. Take a reading, then remove the white tile and replace it with black standard tile without moving the specimen. Obtain a second reading, and calculate the opacity as follows:

$$\text{Opacity} = Y\ \text{value}_{\text{(black backing)}}\ /\ Y\ \text{value}_{\text{(white backing)}}\ x\ 100$$

A total of five identical articles are analyzed and their opacity results recorded. Calculate and report the average opacity and standard deviation for the 10 backsheet laminate measurements to the nearest 0.01%.

Using the same specimens as above, remove the nonwoven web from the film layer for analysis. The cryogenic spray can once again be employed. Precondition samples at about 23 °C ± 2 C° and about 50% ± 2% relative humidity for 2 hours prior to testing. In like fashion, analyze the nonwoven web layer following the above procedure. Calculate and report the average opacity and standard deviation for the 10 nonwoven web measurements to the nearest 0.01%.

In the **"Bond Shape Measurement Method"** area, distance and angle measurements are performed on images generated using a flat bed scanner capable of scanning at a resolution of at least 4800 dpi in reflectance mode (a suitable scanner is the Epson Perfection V750 Pro, Epson, USA). Measurements are performed using ImageJ software (Version 1.43u, National Institutes of Health, USA) and calibrated against a ruler certified by NIST.

Samples of the subject nonwoven web that are 80 mm by 80 mm are used. Precondition the samples at about 23 °C ± 2 C° and about 50% ± 2% relative humidity for 2 hours prior to testing. Identify the machine direction of the nonwoven web and draw a fine line on each sample along the machine direction to enable scanned images to be aligned.

Place the sample to be measured on the flat bed scanner, with the surface bearing the bond impressions or bond shapes facing downward, with the ruler directly adjacent. Placement is such that the dimension corresponding to the machine direction of the nonwoven is parallel to the ruler. A black backing is placed over the specimen and the lid to the scanner is closed. Acquire an image composed of the nonwoven and ruler at 4800 dpi in reflectance mode in 8 bit grayscale and save the file. Open the image file in ImageJ and perform a linear calibration using the imaged ruler.

Unless otherwise stated, dimensional and area measurements are made in triplicate, of three similar bond shapes on each sample for 6 similar samples. The 18 values are averaged and reported.

Not intending to be bound by the specific examples, Figs. 5A through 6B are referenced to illustrate the following dimension measurements. These measurement methods are equally applicable to other bond shapes and repeating bond patterns.

Greatest Measurable Length (L). The bond shape has a perimeter and a greatest measurable length. Identify a shape length line (*e.g.* line 104) which intersects the two farthest-most points along the perimeter. Draw a shape length line through these points. With the measuring tool, measure the length along the line segment between these points to the nearest 0.001 mm. For example, the greatest measurable lengths in Figs. 5B and 6B are indicated at L, respectively measured along shape length lines 104.

Greatest Measurable Width (W). Relative the greatest measurable length, the bond shape has a greatest measurable width measured along a direction perpendicular to the shape length line. Draw two lines, parallel to the shape length line, and tangent to the bond shape perimeter at one or more outermost points that are most distant from the shape length line. These are the shape width lines. With the measuring tool, measure the greatest measurable width between the shape width lines along a line segment perpendicular to the shape length line to the nearest 0.001 mm. For example, the greatest measurable widths in Figs. 5B and 6B are indicated at W, respectively measured between lines 105a and 105b perpendicular to shape length lines 104.

<u>Camber Height (CH).</u> If the bond shape has a perimeter with a convex portion, the convex portion lies a maximum distance from the shape length line, referred to herein as the camber height. Draw a line that is tangent to the convex portion, and parallel to the shape length line. With the measuring tool, measure the distance between width between this tangent line and the shape length line along a direction perpendicular to the shape length line, to the nearest 0.001 mm. For example, the camber heights of the convex portions in Figs. 5B and 6B are CH, and $CH_a$ and $CH_b$, respectively.

<u>Concavity Depth (D).</u> If the bond shape has a perimeter with a concave portion, the concave portion has a maximum distance from the facing shape width line. Draw a line that is tangent to the deepest point along the concave portion of the profile, and parallel to the shape length line. This is the shape concavity line. With the measuring tool, measure the distance between shape concavity line and the shape length line along a direction perpendicular to the shape length line to the nearest 0.001 mm. For example, the concavity depths of the concave portions in Figs. 5B and 6B are D, and $D_a$ and $D_b$, respectively.

<u>Shape Tilt Angle ($\alpha_T$).</u> The bond shape is rotationally oriented relative to the machine direction by shape tilt angle $\alpha_T$. Draw a line in the cross direction, intersecting the shape length line. Draw a line in the machine direction perpendicular to the cross direction line, intersecting both the cross direction line and the shape length line. Using the angle measuring tool, measure the smaller angle between the machine direction line and the shape length line to the nearest 0.1 degree. For example, the angle between lines 108 and 104 in Figure 5B is the shape tilt angle $\alpha_T$.

<u>Pattern Tilt Angle ($\gamma_P$).</u> The bond shapes may form a pattern that is tilted from the machine direction by the angle $\gamma_P$. Identify a repeating series of bond shapes in a column. Draw a column line that is tangent on one side at the same position on two similar shapes having similar rotational orientations in the column. Draw a line in the machine direction that intersects this column line at an angle, if such a line exists. With the angle measuring tool, measure the smaller angle between the column line and the machine direction line to the nearest 0.1 degree.

<u>Airflow Restriction Ratio.</u> The bond shapes form a pattern that identifies a maximum airflow restriction by the corresponding bonding roller at the nip. Identify a repeating series of bond shapes lying in a row. Draw a line in the cross direction which intersects these bond shapes at the position relative the machine direction where the shapes occupy the greatest proportion of the distance along the cross direction line. It will be appreciated that it may be necessary to take measurements along several cross direction lines to empirically and/or iteratively identify the one along which the bond shapes occupy the greatest proportion of the distance. With the measuring tool, measure the length from the start of the repeating series to the corresponding location at the end of the repeating series (including distances between bonding shapes) to the nearest 0.001 mm. This is the repeat length in the cross direction. With the measuring tool, measure each of the lengths of the line segments on the cross direction line that lie over the bond shapes, to the nearest 0.001 mm. Add the lengths of all of these line segments within the repeat length, and divide the total by the repeat length. Report to the nearest 0.001. This is the airflow restriction ratio. For example, in Figure 5C, the repeat length $w_p$ is measured along the cross direction line 107a. The line segments lying over the bond shapes are $w_1$ through $w_4$. The airflow restriction ration is the sum of lengths $w_1$ through $w_4$ divided by the repeat length $w_p$.

<u>Cross-nip Airflow Angle ($\beta_A$).</u> The bond pattern may provide an airflow path that has a machine direction vector component. Draw a line in the cross direction. Identify a line that can be drawn that extends past at least eight rows of bond shapes without intersecting a bond shape, if such a line exists. This is the cross-nip airflow line. Extend this line to intersect the cross direction line. Using the angle measurement tool, measure the smaller angle between the cross direction line and the airflow line and report to the nearest 0.1 degree. For example line 109 in Figure 5A and 109 in figure 6A are cross-nip airflow lines which intersects the cross direction line 107 to form the cross-nip airflow angle $\beta_A$

<u>Bond Area Percentage.</u> Identify a single repeat pattern of bond shapes and areas between them and enlarge the image such that the repeat pattern fills the field of view. In ImageJ, draw a rectangle that circumscribes the repeat pattern. Calculate area of the rectangle and record to the nearest 0.001 mm$^2$. Next, with the area tool, trace the individual bond shapes or portions thereof that are entirely within the repeat pattern/rectangle and calculate and add the areas of all bond shapes or portions thereof that are within the repeat pattern/rectangle. Record to the nearest 0.001 mm$^2$. Calculate as follows:

$$\text{Bond Area \%} = \text{(Sum of areas of bond shapes within repeat pattern)} / \text{(total area of repeat pattern)} \times 100\%$$

Repeat for a total of three non-adjacent regions randomly selected across the sample. Record as Percent Bond Area to the nearest 0.01%. Calculate the average and standard deviation of all 18 of the bond area percentage measurements and report to the nearest 0.01 %.

<u>Average Individual Bond Area.</u> Enlarge the image of a region of the sample such that edges of a bond shape can be identified. With the area tool, manually trace the perimeter of a bond. Calculate and record the area to the nearest 0.001 mm$^2$. Repeat for a total of five non-adjacent bonds randomly selected across the total sample. Measurements are made on each sample. A total of six samples are measured. Calculate the average and standard deviation of all 30 bond area measurements and report to the nearest 0.001 mm$^2$.

**Claims**

1. A process for the forming of a bonded nonwoven web from a batt **characterized in that** it comprises the steps of

  a. providing a batt comprising heat bondable individual fibers;
  b. feeding said batt along a machine direction to a nip between a first and a second surface of a first and a second roller, respectively;

    i. whereby at least the first of said surfaces comprises spaced apart bonding protrusions surrounded by recessed areas,
    ii. said bonding protrusions exhibiting

      A. the ratio of the greatest measurable width W to the greatest measurable length L of at least 1:2.5,
      B. while the perimeter of the shape of the surface of the bonding protrusions comprise a convexly formed portion,

  c. feeding the batt into said nip,

    i. thereby compressing said batt in said nip between said first and said second roller,
    ii. and thereby affecting the fiber positioning by said bonding protrusions which are either asymmetric or exhibit a shape tilt angle $\alpha_T$ of between 1° and 40° relative to the machine direction ;

  d. bonding said batt in said nip by contacting the web with said bonding protrusions of said first surface and said second surface thereby forming consolidating bonds comprising thermally fused fibers;
  e. removing said web from said nip.

2. A process according to any of the preceding claims, wherein the perimeter of the surface of said bonding protrusions contains several pairs of convex - concave parts.

3. A process according to any of the preceding claims, wherein said bonding protrusions are oriented so that the MD direction forms an angle with the shape line of the shape of the surface of said bonding protrusions form a shape tilt angle $\alpha_T$ of between 5° and 15°, more preferably between 8° and 12°.

4. A process according to any of the preceding claims, wherein said bonding protrusions are arranged in a pattern so that on the surface of the roll there are lines which do not intersect any individual bonding protrusion, but intersect the axis in the CD direction perpendicular to MD, preferably forms an angle with the cross-machine direction CD, extending perpendicularly to the machine direction, $\beta_A$ greater than 45°, preferably between 50° and 90°, even more preferably between 60° and 90°.

5. A process according to any of the preceding claims, wherein said bonding protrusions are oriented so that the angle $\gamma_P$ between the CD direction and the orientation of the shorter side of the bonding protrusion which smaller than 4°, preferably smaller than 3° and even more preferably smaller than 2.5°.

6. A process according to any of the preceding claims, wherein the number of individual bonding protrusions per cm$^2$ on said surfaces is lower than 11.

7. A nonwoven web comprising heat bondable fibres and comprising a plurality of batt consolidating bond impressions comprising thermally fused fibers;

  a. wherein the plurality of bond impressions forms a regular pattern and
  b. wherein the bond impressions have a bond shape

    i. with the bond shape perimeter comprising a convex portion and
    ii. a greatest measurable length and a greatest measurable width,

1. wherein an aspect ratio of the greatest measurable length to the greatest measurable width is at least 2.5;

iii. and wherein the bond shape is asymmetric or is oriented such that a line intersecting the bond shape perimeter along which the greatest measurable length exists and intersects an axis lying on the surface along the machine direction to form an angle $\alpha_T$ of between 1 degree and 40 degrees.

**8.** A web according to claim 7, wherein at least a part of the fibres comprise materials selected form the group consisting of polypropylene, polyethylene, copolymers, aliphatic polyesters, thermoplastic polysaccharides, other biopolymers, or mixtures thereof, dyes, or additives altering the surface properties of the material.

**9.** A web according to any of claims 7 to 8, wherein the perimeter of said bond shapes contains several pairs of convex - concave parts.

**10.** A web according to any of claims 7 to 9, wherein said bond shapes are oriented so that the MD direction forms an angle with the shape line of said bond shapes form a shape tilt angle $\alpha_T$ of between 5° and 15°, more preferably between 8° and 12°.

**11.** A web according to any of claims 7 to 10, wherein said bond shapes are arranged in a pattern so that there are lines which do not intersect any individual bond shape, but intersect the axis in the CD direction perpendicular to MD, preferably forms an angle with the cross-machine direction CD, extending perpendicularly to the machine direction, $\beta_A$ greater than 45°, preferably between 50° and 90°, even more preferably between 60° and 90°.

**12.** A web according to any of claims 7 to 11, wherein said bond shapes are oriented so that the angle $\gamma_P$ between the CD direction and the orientation of the shorter side of the bond shapes which is smaller than 4°, preferably smaller than 3° and even more preferably smaller than 2.5°.

**13.** A web according to any of claims 7 to 12, wherein the number of individual bond shapes per $cm^2$ is lower than 11.

**14.** The nonwoven web according to the any of claims 7 to 13, wherein the basis weight of the web is less than 150 gsm, preferably less than 20 gsm more preferably between 12 gsm and 17 gsm.

**15.** Nonwoven web according to any of claims 7 through 14, wherein the bondshapes of at least some of mutually adjacent bonds identify venturi passageways between each other.

**Patentansprüche**

**1.** Verfahren zur Herstellung eines ungewebten Textilstoffes aus einem Faservlies, **dadurch gekennzeichnet, dass** es die nachstehenden Schritte umfasst:

a. Bereitstellen eines Faservlieses, das einzelne wärmebindbare Fasern umfasst,
b. Zuführen des besagten Faservlieses entlang der Längsrichtung der Maschine zu einem Spalt zwischen einer ersten und zweiten Oberfläche einer ersten bzw. zweiten Walze,

i. wobei zumindest die erste der besagten Oberflächen gegenseitig beabstandete Fügevorsprünge umfasst, die mit ausgesparten Bereichen umgegeben sind,
ii. wobei die besagten Fügevorsprünge

A. das Verhältnis zwischen der größten messbaren Breite B und der größten messbaren Länge L von mindestens 1:2,25,
B. wobei der Umfang der Oberflächenform der Fügevorsprünge einen konvex ausgeformten Abschnitt aufweist,

c. Einführen des Faservlieses in den besagten Spalt,

i. wodurch das besagte Faservlies in dem besagten Spalt zwischen der besagten ersten und der besagten zweiten Walze zusammengepresst wird,

ii. und wodurch die Positionierung mittels der besagten Fügevorsprünge, die entweder asymmetrisch sind oder einen formgebenden Neigungswinkel $\alpha_T$ von 1 ° bis 40° gegenüber der Bewegungsrichtung der Maschine aufweisen, beeinflusst wird,

d. Fügen der Fasern des besagten Faservlieses, indem das herzustellende ungewebte Textilstoff in dem besagten Spalt in Kontakt mit den besagten Fügevorsprüngen der besagten ersten und der besagten zweiten Oberfläche gebracht wird, wodurch konsolidierende, wärmegebundenen Fasern enthaltende Fügepunkte gebildet werden, e. Herausnehmen des besagten Textilstoffs aus dem besagten Spalt.

2. Verfahren nach einem der vorhergehenden Ansprüche, wobei der Umfang der Oberfläche der besagten Fügevorsprünge mehrere Paare von konvexen und konkaven Abschnitten umfasst.

3. Verfahren nach einem der vorhergehenden Ansprüche, wobei die besagten Fügevorsprünge derart orientiert sind, dass die Bewegungsrichtung der Maschine mit der Oberflächenlinie der Form der besagten Fügevorsprünge einen Winkel einschließt, und zwar den formgebenden Neigungswinkel $\alpha_T$, der zwischen 5° und 15°, vorteilhafterweise zwischen 8° und 12° liegt.

4. Verfahren nach einem der vorhergehenden Ansprüche, wobei die besagten Fügevorsprünge in derartigem Muster angeordnet sind, dass die Oberfläche der jeweiligen Walze mehrere Linien umfasst, die derart verlaufen, dass sie keinen einzelnen Fügevorsprung überschneiden und dahingegen die senkrecht zur Bewegungsrichtung der Maschine verlaufende Querrichtungsachse, überschneiden, wobei sie vorteilhafterweise mit der zur Bewegungsrichtung der Maschine senkrecht verlaufende Querrichtunglinie einen Winkel $\beta_A$ einschließen, der grösser ist als 45° und der vorteilhafterweise zwischen 50° und 90°, vorzüglich zwischen 60° und 90°, liegt.

5. Verfahren nach einem der vorhergehenden Ansprüche, wobei die besagten Fügevorsprünge derart orientiert sind, dass der Winkel $\gamma_P$ zwischen der Querrichtung und der Orientierungslinie der kürzeren Seite des jeweiligen Fügevorsprungs kleiner ist als 4°, vorteilhafterweise kleiner ist als 3° und vorzüglich kleiner ist als 2,5°.

6. Verfahren nach einem der vorhergehenden Ansprüche, wobei die Anzahl der einzelnen Fügevorsprünge pro cm$^2$ der besagten Oberflächen niedriger ist als 11.

7. Ungewebter Textilstoff, der wärmebindbare Fasern sowie eine Vielzahl von konsolidierenden, wärmegebundenen Fasern des Faservlieses beinhaltenden Fügepunkten umfasst,

a. wobei die Vielzahl von Fügepunkten einen regelmäßigen Muster bildet und
b. wobei die Fügepunkte eine Form haben, dass

i. der Umfang der Oberflächenform der Fügepunkte einen konvex ausgeformten Abschnitt umfasst und
ii. die Form der Fügepunkte die größte messbaren Breite sowie die größte messbare Länge aufweist,

1. wobei das Verhältnis zwischen der größten messbaren Länge und der größten messbaren Breite mindestens 2,25 beträgt,

iii. und die Form der Fügepunkte asymmetrisch ist oder derart orientiert ist, dass sich eine Linie, die den Umfang des Fügepunkts überschneidet und die entlang dessen größten messbaren Länge verläuft, zugleich mit einer auf der Oberfläche liegenden und sich in der Bewegungsrichtung der Maschine erstreckenden Achse derart überschneidet, dass sie mit der besagten Achse einen Winkel $\alpha_T$ von 1° bis 40° einschließt.

8. Ungewebter Textilstoff nach Anspruch 7, wobei zumindest ein Teil der Fasern derartige Werkstoffe umfasst, die aus der sich aus Polypropylen, Polyethylen, Kopolymeren, aliphatischen Polyesteren, thermoplastischen Polysacchariden, Biopolymeren oder deren Gemischen bzw. aus Farbstoffen oder die Oberflächeneigenschaften des Werkstoffs verändernden Zusatzstoffen zusammensetzenden Gruppe ausgewählt sind.

9. Ungewebter Textilstoff nach einem der Ansprüche 7 und 8, wobei der Umfang der Oberfläche der besagten Fügepunkte mehrere Paare von konvexen und konkaven Abschnitten umfasst.

10. Ungewebter Textilstoff nach einem der Ansprüche 7 bis 9, wobei die besagten Fügepunkte derart orientiert sind, dass die Bewegungsrichtung der Maschine mit der Oberflächenlinie der Form der besagten Fügevorsprünge einen Winkel einschließt, und zwar den formgebenden Neigungswinkel $\alpha_T$, der zwischen 5° und 15°, vorteilhafterweise zwischen 8° und 12° liegt.

11. Ungewebter Textilstoff nach einem der Ansprüche 7 bis 10, wobei die besagten Fügepunkte in derartigem Muster angeordnet sind, dass es mehrere Linien gibt, die derart verlaufen, dass sie keinen einzelnen Fügepunkt überschneiden und dahingegen die senkrecht zur Bewegungsrichtung der Maschine verlaufende Querrichtungsachse, überschneiden, wobei sie vorteilhafterweise mit der zur Bewegungsrichtung der Maschine senkrecht verlaufende Querrichtunglinie einen Winkel $\beta_A$ einschließen, der grösser ist als 45° und der vorteilhafterweise zwischen 50° und 90°, vorzüglich zwischen 60° und 90°, liegt.

12. Ungewebter Textilstoff nach einem der Ansprüche 7 bis 11, wobei die besagten Fügepunkte derart orientiert sind, dass der Winkel $\gamma_P$ zwischen der Querrichtung und der Orientierungslinie der kürzeren Seite des jeweiligen Fügevorsprungs kleiner ist als 4°, vorteilhafterweise kleiner ist als 3° und vorzüglich kleiner ist als 2,5°.

13. Ungewebter Textilstoff nach einem der Ansprüche 7 bis 12, wobei die Anzahl der einzelnen Fügepunkte pro cm$^2$ der Oberfläche niedriger ist als 11.

14. Ungewebter Textilstoff nach einem der Ansprüche 7 bis 13, wobei das Basisgewicht des ungewebten Textilstoffs niedriger ist als 150 g/m$^2$, vorteilhafterweise niedriger ist als 20 g/m$^2$ und vorzüglich zwischen 12 g/m$^2$ und 17 g/m$^2$ liegt.

15. Ungewebter Textilstoff nach einem der Ansprüche 7 bis 14, wobei die Formen von mindestens einigen der benachbarten Fügepunkte Venturikanäle definieren, die sich zwischen den jeweiligen Fügepunkten erstrecken.

## Revendications

1. Procédé pour la formation d'un tissu liée non tissée à partir d'une couche des fibres, **caractérisé en ce qu'**il comprend les phases consistant en

> a. fourniture d'une couche de fibres comprenant des fibres individuelles termiquement liable;
> b. introduction de ladite couche des fibres le long de la direction de la machine à une fente de pressage entre une première et une seconde surface d'un premier et d'un second rouleau, respectivement ;
>
>> i. où au moins la première desdites surfaces comprend des saillants de liaison espacés, les saillants étant entourés par des zones en creux,
>> ii. lesdits saillants de liaison présentant :
>>
>>> A) le rapport de la plus grande largeur mesurable W à la plus grande longueur mesurable L d'au moins 1 : 2,5,
>>> B) tandis que le périmètre de la forme de la surface des saillants de liaison comprend une partie formée de façon convexe,
>
> c. introduction de la couche des fibres dans ladite fente de pressage,
>
>> i. compressant ainsi ladite couche des fibres dans ladite fente de pressage entre ledit premier et ledit deuxième rouleau,
>> ii. et affectant ainsi le positionnement de fibre par lesdites saillants de liaison qui sont soit asymétriques ou présentent un angle d'inclinaison $\alpha_T$, quie est entre 1° et 40° par rapport à la direction de la machine ;
>
> d. la liaison de ladite couche des fibres dans ladite fente de pressage par mise en contact du tissu avec desdits saillants de liaison de ladite première surface et ladite seconde surface formant ainsi la consolidation des liaisons comprenant des fibres thermiquement fondues ;
> e. enlèvement de ledit tissu de ladite fente de pressage.

2. Procédé selon l'une quelconque des revendications précédentes, où le périmètre de la surface desdites saillants de liaison contient plusieurs paires de parties convexes - concaves.

3. Procédé selon l'une quelconque des revendications précédentes, où lesdits saillants de liaison sont orientés de telle sorte que la direction MD forme un angle avec la ligne de forme de surface desdits saillants de liaison pour former un angle de forme d'inclinaison $\alpha_T$ compris entre 5° et 15°, de préférence entre 8° et 12°.

4. Procédé selon l'une quelconque des revendications précédentes, où lesdits saillants de liaison sont disposés selon un dessin de telle sorte que sur la surface du rouleau il y a des lignes qui ne croisent aucun saillant de liaison individuel, mais croisent l'axe dans la direction CD perpendiculaire à MD, et qu'ils forment de préférence un angle avec la direction CD transversal à la machine, s'étendant perpendiculairement à la direction de la machine, $\beta_A$ étant supérieur à 45°, de préférence entre 50° et 90° ou mieux encore de préférence entre 60° et 90°.

5. Procédé selon l'une quelconque des revendications précédentes, où lesdits saillantes de liaison sont orientés de telle sorte que l'angle $\gamma_P$ entre la direction de CD et l'orientation du côté plus court du saillant de liaison est inférieur à 4°, de préférence inférieur à 3°, ou mieux encore de préférence inférieure à 2,5°.

6. Procédé selon l'une quelconque des revendications précédentes, où le nombre des saillants de liaison individuels par cm$^2$ sur lesdites surfaces est inférieur à 11.

7. Un tissu non tissé comprenant des fibres termiquement liables et comprenant une pluralité d'impressions des points de liaison consolidants la couche de fibres, comprenant des fibres thermiquement fondues ;

    a. où la pluralité des points de liaison forme un dessin régulier et
    b. où les points de liaison possèdent une forme de liaison,

        i. avec le périmètre de la forme de liaison comprenant une partie convexe et
        ii. la plus grande longueur mesurable et la plus grande largeur mesurable,

            1. où un rapport d'aspect de la plus grande longueur mesurable à la plus grande largeur mesurable est d'au moins 2,5 ;

        iii. et où la forme de liaison est asymétrique ou est orientée de telle sorte qu'une ligne d'intersection du périmètre de la forme de liaison le long de laquelle la plus grande longueur mesurable existe et croise un axe situé sur la surface le long de la direction de la machine pour former un angle $\alpha_T$ compris entre 1 degré et 40 degrés.

8. Le tissu selon la revendication 7, où au moins une partie des fibres comprennent des matériaux choisis dans le groupe constitué par le polypropylène, le polyéthylène, les copolymères, les polyesters aliphatiques, les polysaccharides thermoplastiques, d'autres biopolymères, ou leurs mélanges, des colorants, ou des additifs modifiant les propriétés de surface du matériau

9. Le tissu selon l'une quelconque des revendications 7 à 8, où le périmètre desdites formes de liaison contient plusieurs paires de parties convexes - concaves.

10. Le tissu selon l'une quelconque des revendications 7 à 9, où lesdites formes de liaison sont orientées de telle sorte que la direction MD forme un angle avec la ligne de forme desdites formes de liaison pour former un angle d'inclinaison $\alpha_T$ compris entre 5° et 15°, plus préférablement entre 8° et 12°.

11. Le tissu selon l'une quelconque des revendications 7 à 10, où lesdites formes de liaison sont disposées selon un dessin de sorte qu'il existent des lignes qui ne coupent aucune forme de liaison individuelle, mais coupent l'axe dans la direction CD perpendiculaire à MD, en formant de préférence un angle avec la direction CD transversale à la machine, perpendiculaire à la direction de la machine, $\beta_A$ supérieur à 45°, de préférence entre 50° et 90°, plus préférablement entre 60° et 90°.

12. Le tissu selon l'une quelconque des revendications 7 à 11, où lesdites formes de liaison sont orientées de telle sorte que l'angle $\gamma_P$ entre la direction de CD et l'orientation du côté plus court des formes de liaison est inférieure à 4°, de préférence inférieure à 3° et encore plus préférablement inférieure à 2,5°.

13. Le tissu selon l'une quelconque des revendications 7 à 12, où le nombre de formes de liaison individuelles par cm$^2$ est inférieur à 11.

**14.** Le tissu non tissé selon l'une quelconque des revendications 7 à 13, où le poids de base du tissu est inférieur à 150 gsm, de préférence inférieur à 20 gsm et encore plus préférablement entre 12 gsm et 17 gsm.

**15.** Le tissu non tissé selon l'une quelconque des revendications 7 à 14, où les formes de liaison individuelles d'au moins de quelques formes de liaison mutuellement adjacentes identifient des passages venturi entre celles-ci.

**Fig. 1A**

**Fig. 1B**

**Fig. 2A**

EP 2 689 058 B1

Fig. 2B

**Fig. 3**

**Fig. 4A**

**Fig. 4B**

**Fig. 5A**

**Fig. 5B**

**Fig. 5C**

**Fig. 6A**

**Fig. 6B**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4333979 A
- JP 2004113489 B
- WO 0001215 A
- WO 9411186 A
- WO 1999014415 A
- WO 2008129138 A
- WO 2009021473 A
- US 6645569 B, Cramer
- US 6863933 B, Cramer
- US 7112621 B, Rohrbaugh
- US 338603 A
- US 10338610 B, Cramer
- US 13005237 B, Lu
- US 20050159720 A
- WO 02064877 A
- US 10758066 B
- US 6632385 B
- US 6803103 B
- US 20060057921 A
- US 20040131820 A
- US 5266392 A
- US 5370764 A